(19)

**Europäisches Patentamt**
**European Patent Office**
**Office européen des brevets**

(11) **EP 4 745 753 A1**

(12) **EUROPEAN PATENT APPLICATION**

(43) Date of publication:
**20.05.2026  Bulletin 2026/21**

(51) International Patent Classification (IPC):
**G06F 7/544** (2006.01)

(21) Application number: **25208279.7**

(52) Cooperative Patent Classification (CPC):
**G06F 7/5443; G06F 17/16**

(22) Date of filing: **13.10.2025**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **14.11.2024  US 202463720263 P**
**22.08.2025  US 202519307485**

(71) Applicant: **INTEL Corporation**
**Santa Clara, CA 95054 (US)**

(72) Inventors:
• **RAHA, Arnab**
**San Jose, 95136 (US)**
• **RAMACHANDRAN, Akshat**
**Atlanta, 30318 (US)**
• **KUNDU, Souvik**
**Los Angeles, 90034 (US)**
• **KUNDU, Shamik**
**San Jose, 95132 (US)**
• **MATHAIKUTTY, Deepak Abraham**
**Chandler, 85224 (US)**

(74) Representative: **HGF**
**HGF Limited**
**4th Floor, 1 City Square**
**Leeds LS1 2ES (GB)**

(54) **IMPLEMENTING N:M SPARSITY IN A DIGITAL COMPUTE-IN-MEMORY ACCELERATOR**

(57)     To support flexible N:M sparsity pattern in a DCiM macro, the DCiM macro is subdivided into multiple sub-macros according to a partitioning factor P. Each sub-macro can support 1:2 sparsity ratio. Leveraging the partitioned design, the sub-macros can be grouped together to support different N:M sparsity patterns. To determine optimal N:N sparsity pattern for each layer of a neural network, an algorithm can determine the value A of a sparsity ratio A/B is based on the number of outliers in a layer, and the value B of the sparsity ratio A/B is based on the locality measure of the outliers representing the spatial distribution of the outliers. Moreover, the optimal N:M sparsity pattern that is aligned with the determined sparsity ratio A/B can be selected based on whether to prioritize latency or accuracy, or to balance both latency and accuracy.

FIG. 1A

EP 4 745 753 A1

# Description

## Cross-reference to Related Application(s)

This application claims priority to and/or receives benefit from U.S. Provisional Patent Application No. 63/720,263, filed on 14 November 2024 and titled "COMPUTE-IN-MEMORY ARCHITECTURE FOR ACCELERATING NEURAL NETWORK OPERATION". The U.S. Provisional Patent Application is hereby incorporated by reference in its entirety.

## Background

Digital compute-in-memory (DCiM) performs data processing in the analog domain directly within or next to memory units rather than shuttling data back and forth between separate memory and processing units. DCiM implementations can employ non-volatile memory technologies and digital circuits that can enable digital computations to be performed directly within the memory array.

## Brief Description of the Drawings

Embodiments will be readily understood by the following detailed description in conjunction with the accompanying drawings. To facilitate this description, like reference numerals designate like structural elements. Embodiments are illustrated by way of example, and not by way of limitation, in the figures of the accompanying drawings.

FIG. 1A a digital accelerator implementing a Von Neumann architecture, according to some embodiments of the disclosure.
FIG. 1B is a digital accelerator implementing a DCiM architecture, according to some embodiments of the disclosure.
FIG. 2 illustrates a digital accelerator having a DCiM macro partitioned into P sub-macros, according to some embodiments of the disclosure.
FIG. 3 illustrates a column of a sub-macro, according to some embodiments of the disclosure.
FIG. 4 illustrates a compute-in-memory cell of a sub-macro having a two-to-one (2:1) multiplexer, according to some embodiments of the disclosure.
FIG. 5 illustrates an implementation of a distribution network comprising P number of P-to-one (P:1) multiplexers, according to some embodiments of the disclosure.
FIG. 6 illustrates an implementation of a merging network comprising an adder tree, according to some embodiments of the disclosure.
FIGS. 7A-B illustrates a walkthrough example implementing 1:4 sparsity pattern, according to some embodiments of the disclosure.
FIGS. 8A-B illustrates a walkthrough example implementing 4:8 sparsity pattern, according to some embodiments of the disclosure.
FIGS. 9A-C illustrates different optimal sparsity patterns for different outlier presence and outlier distributions, according to some embodiments of the disclosure.
FIG. 10 illustrates a system to optimize N:M sparsity pattern and produce a sparse neural network, according to some embodiments of the disclosure.
FIG. 11 is a flow diagram illustrating a method for determining a count of outliers and a locality measure of outliers, according to some embodiments of the disclosure.
FIG. 12 is a flow diagram illustrating a method for determining an optimal N:M sparsity pattern, according to some embodiments of the disclosure.
FIG. 13 is a flow diagram illustrating a method for determining an optimal N:M sparsity pattern, according to some embodiments of the disclosure.
FIG. 14 is a flow diagram illustrating a method for accelerating multiply-and-accumulate operations of input activations and weights with an N:M sparsity pattern, according to some embodiments of the disclosure.
FIG. 15 is a block diagram of an exemplary computing device, according to some embodiments of the disclosure.

## Detailed Description

### *Overview*

Recent advances in deep neural network (DNN) research reveal that many DNNs are highly over-parameterized, allowing for significant parameter pruning. There are two types of sparsity: unstructured sparsity and structured sparsity. Unstructured sparsity refers to the random removal of weights in a neural network, resulting in irregularly distributed zero elements within the model. While this approach can achieve high sparsity and minimal accuracy loss, it poses challenges for efficient hardware acceleration due to its unpredictability, often slowing down computation. In contrast, structured sparsity removes weights in a regular, predefined sparsity pattern, such as eliminating entire channels or following specific N:M ratios. Structured sparsity allows hardware accelerators to be more efficient and simplify processing logic, avoiding bottlenecks inherent in unstructured approaches. In particular an N:M sparsity pattern means that only N elements in every M-group are non-zero. Phrased differently, N:M refers to a pattern where for every M consecutive parameter in the network, only N are non-zero. While unstructured sparsity leads to irregular computation and hardware inefficiencies, structured sparsity approaches have gained traction for their balance of accuracy and acceleration efficiency, as seen in some accelerators supporting specific sparsity patterns such as 1:2, 2:4, and 4:8. Specifically, structured sparsity ensures a fixed sparsity ratio or number of zeros in a block or window of parameters (or a number of non-zeros in a block or window of parameters). The limited selection window can be realized with low overhead multiplexing logic, leading to significant benefits.

Although certain DCiM implementations are capable of supporting fixed structured sparsity ratios, accommodating flexible structured sparsity presents significant challenges. Specifically, enabling a range of N:M sparsity patterns is not straightforward for DCiM-based accelerators, as integrating large multiplexers within each memory cell to accommodate varying sparsity patterns greatly increases area overhead and compromises the regular architecture of the DCiM macro.

To address this issue, a FlexCiM design (a flexible DCiM architecture) can be implemented in a DCiM-based accelerator. The FlexCiM design offers a low overhead flexible structured sparsity DCiM accelerator that can achieve significantly higher computational throughput, throughput per watt, and area efficiency compared to a dense or unstructured sparsity-based digital accelerators and other DCiM-based accelerators. In some embodiments, FlexCiM supports multiple N:M sparsity ratios at INT8 mode of operation.

FlexCiM can accelerate multiply-and-accumulate (MAC) operations in hardware accelerators for neural networks, by supporting flexible N:M sparsity pattern. FlexCiM divides a DCiM macro into multiple sub-macros according to a partitioning factor P. The full DCiM macro can have a grid or array of compute-in-memory cells having dimensions X times Y (e.g., X rows and Y columns of compute-in-memory cells). In other words, a DCiM macro is subdivided into P number of sub-macros. Each sub-macro has a grid of compute-in-memory cells having dimensions X divided by P (X/P) times Y (e.g., X/P rows and Y columns of compute-in-memory cells). A compute-in-memory cell can have B number of memory elements to store B number of bits, such as a B-bit weight. The compute-in-memory cell is equipped with a two-to-one multiplexer. The compute-in-memory cell can implement bit-serial multiplication of the weight and an input activation. The two-to-one multiplexer allows the compute-in-memory cell to select between pairs of input activations to implement 1:2 sparsity. Multiplication results generated by a column of compute-in-memory cells in a sub-macro can be summed together to form partial sum. Leveraging the partitioned design, the sub-macros implementing the baseline 1:2 sparsity ratio can be grouped together to support different N:M sparsity patterns and can also operate with a completely dense M:M sparsity pattern.

To support flexible N:M sparsity patterns, an input activation buffer is included to buffer input activations according to N and M of the sparsity pattern, and a distribution network is implemented to direct pairs of input activations received from the input activation buffer to the appropriate sub-macros. The distribution network can include P number of P-to-one multiplexers with P outputs to the P number of sub-macros respectively. In particular, the M value in the N:M sparsity pattern indicates the number of input activations to be distributed by each P-to-one multiplexer. The N value of the N:M sparsity pattern indicates the number of sub-macros that are aggregated together to process the same block M. If N>1, multiple P-to-one multiplexers would receive the same set of input activations. Phrased differently, the P number of P-to-one multiplexers can receive N number of identical sets of input activations arranged in pairs.

A P-to-one multiplexers can have P inputs, and each input can receive two input activation words or a pair of input activations. The P-to-one multiplexer can selectively route a pair of input activations to a corresponding sub-macro. The P-to-one multiplexer can select one pair of input activations at one of the P inputs. The selection signals to the P-to-one multiplexers can be generated based on metadata that encodes the coordinates of non-zero weights. The two-to-one multiplexer of a compute-in-memory cell can selectively select one of the input activations in the pair of input activations received from the P-to-one multiplexer and perform multiplication of the selected input activation with the weight stored in the compute-in-memory cell. The selection signal to the two-to-one multiplexer can be generated based on metadata that encodes the coordinates of non-zero weights.

Compared to a dense DCiM accelerator, an accelerator implementing FlexCiM results in a significant improvement in computational throughput, throughput per watt, and area efficiency for a LLaMA3-8B model. FlexCiM can deliver up to 1.75x lower inference latency and 1.5x lower energy consumption compared to other sparse accelerators.

Algorithms can be implemented to prune weights with minimal performance degradation. But these algorithms have several shortcomings. Some algorithms assign uniform sparsity patterns to all layers of the neural network, which can be suboptimal for some neural networks because outlier features can vary from one layer to another. Another algorithm examines the number of outliers in a layer and varied different N values when assigning N:M sparsity patterns. Such algorithm has a constraint in that the achieved model accuracy at high sparsity ratios is limited.

To address this issue, a FLOW framework (flexible layer-wise outlier-density-aware algorithm) can be implemented to determine optimal N:M sparsity patterns for a given layer. The value A of a sparsity ratio A/B is determined based on the number of outliers in a layer, and the value B of the sparsity ratio A/B is determined based on the locality measure of the outliers representing the spatial distribution of the outliers. The locality measure indicates how close or far apart the identified outliers are distributed in a layer. Moreover, the optimal N:M sparsity pattern that is aligned with the determined sparsity ratio A/B can be selected based on whether to prioritize latency or accuracy, or to balance both latency and accuracy.

Compared to other frameworks, FLOW results in significantly better pruned model with minimal accuracy degradation while taking into account of model performance on the FlexCiM architecture. FLOW can outperform other frameworks with an accuracy improvement of 36%.

Herein, the sparsity ratio of A/B refers to having A non-zero elements out of B elements. The structured sparsity pattern of N:M refers to having N non-zero elements out of a contiguous block of M elements.

*Comparing Von Neumann architecture and DCiM architecture*

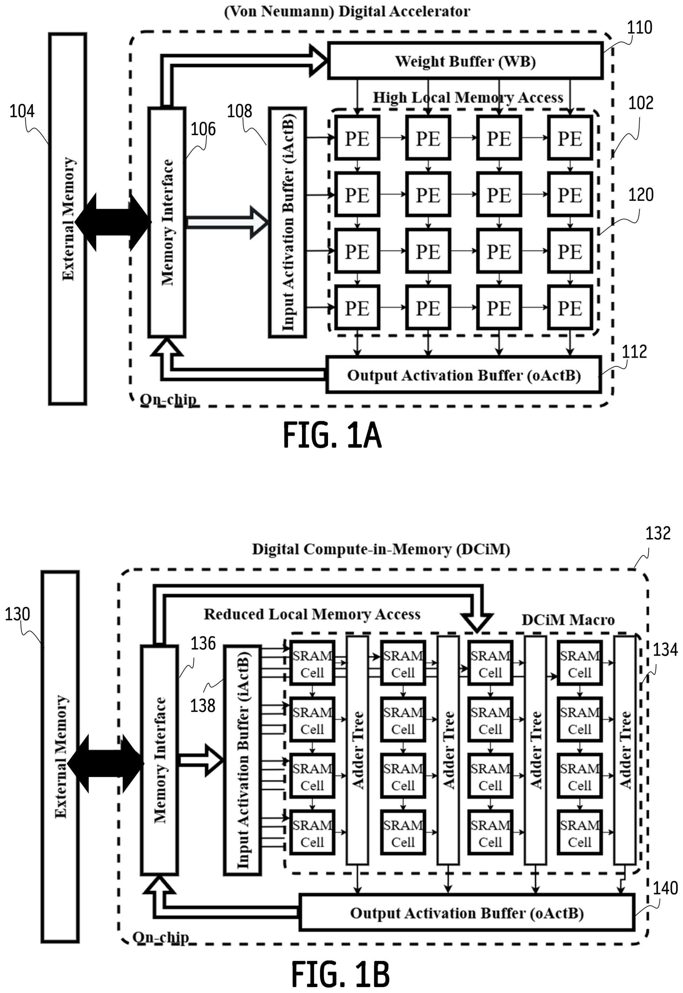

FIG. 1A a digital accelerator 102 implementing a Von Neumann architecture, according to some embodiments of the disclosure. Digital accelerator 102 (shown as the "on-chip" region), can interface with external memory 104 via memory interface 106. Digital accelerator 102 can include grid 120 of processing elements (PEs), e.g., an array of PEs.

Memory interface 106 can manage data flowing between components in digital accelerator 102 and external memory 104. External memory 104 can be the primary storage for model parameters and input data and can supply weights and input activations to digital accelerator 102. Memory interface 106 can bridge external memory 104 and on-chip storage/buffers such as input activation buffer 108, weight buffer 110, and output activation buffer 112. Memory interface 106 can handle data fetching and synchronization and ensure that weights and input activations are delivered to appropriate on-chip storage/buffers.

Weight buffer 110 can store weights fetched from external memory 104. Input activation buffer 108 can store input activations fetched from external memory 104. Weight buffer 110 can supply weights to grid 120 of PEs, and input activation buffer 108 can supply input activations to grid 120 of PEs. Grid 120 of PEs can individually perform multiplication of an input activation and a weight, and the PEs can be interconnected to allow multiplication results to be accumulated. Output activation buffer 112 can collect and store output activations produced by grid 120 of PEs. Output activation buffer 112 can, via memory interface 106, write output activations to external memory 104.

The decode stage of a large language model inference is memory bound, with loading of weights from weight buffer 110 to grid 120 of PEs being a significant bottleneck. Shuttling the weights from weight buffer 110 to grid 120 consume significant energy and time.

FIG. 1B is a digital accelerator implementing a DCiM architecture, according to some embodiments of the disclosure. Digital accelerator 132 (shown as the "on-chip" region), can interface with external memory 130 via memory interface 136. Digital accelerator 132 can include DCiM macro 134, which includes a grid of compute-in-memory cells (shown as "SRAM cell") and adder trees that sums outputs from a column of compute-in-memory cells. SRAM stands for static random access memory.

Memory interface 136 can manage data flowing between components in digital accelerator 132 and external memory 104. External memory 130 can be the primary storage for model parameters and input data and can supply weights and input activations to digital accelerator 132. Memory interface 136 can bridge external memory 130 and on-chip storage/buffers such as input activation buffer 138 and output activation buffer 140. Memory interface 136 can handle data fetching and synchronization and input activations are delivered to input activation buffer 138. Memory interface 136 can bridge external memory 130 and the compute-in-memory cells in DCiM macro 134. Memory interface 136 can load weights directly into storage/memory elements in the compute-in-memory cells.

Input activation buffer 138 can store input activations fetched from external memory 130. Input activation buffer 138 can supply input activations to compute-in-memory cells of DCiM macro 134. Input activation buffer 138 can be positioned close to digital accelerator 132 to reduce latency. Compute-in-memory cells can individually perform multiplication of an input activation and a weight. The multiplication computation can be performed through bit-serial multiplication or bit-parallel multiplication. Advantageously, the computation occurs directly within the compute-in-memory cell and obviates the need to shuttle weights from an on-chip weight buffer onto the PEs. An adder tree per column of compute-in-memory cells can accumulate multiplication results of the compute-in-memory cells. Output activation buffer 140 can collect and store output activations produced by DCiM macro 134. Output activation buffer 140 can, via memory interface 136, write output activations to external memory 130. Output activation buffer 140 can include a register file to store output activations. Utilizing a register file can reduce output activation traffic to memory interface 136.

*FlexCiM architecture*

Supporting flexible N:M sparsity in DCiM architectures is not trivial. The FlexCiM architecture can support various N:M sparsity patterns (e.g., 1:1, 1:2, 1:4, 1:8, 1:16, 2:4, 2:8, 2:16, 4:8, 4:16, 8:16, etc.) while retaining the power savings and low data movement costs of a CiM architecture and adding only a small amount of area overhead. In some embodiments, N and M are powers of two. Supporting flexible N:M sparsity allows sparsity ratio and pattern to be adjusted for a given neural network and for a given layer to balance model accuracy and latency.

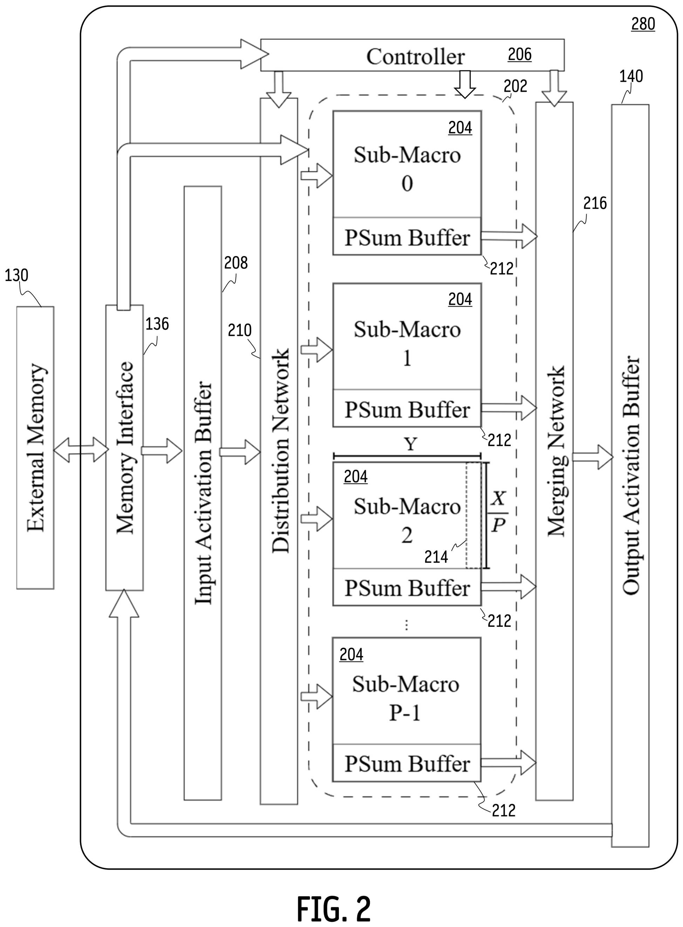

FIG. 2 illustrates digital accelerator 280 having DCiM macro 202 partitioned into P sub-macros 204, according to some embodiments of the disclosure. Digital accelerator 280 can include an integrated circuit to accelerate MAC operations of input activations and weights with an N:M sparsity pattern. The N:M sparsity pattern can be flexible, meaning that digital accelerator 280 can support a variety of N:M sparsity patterns.

Digital accelerator 280 can include one or more instances of DCiM macro 202. To utilize DCiM macro 202, digital accelerator 280 can include input activation buffer 208, distribution network 210, and merging network 216. Digital accelerator 280 can further include memory interface 136 and output activation buffer 140. Memory interface 136 can interface with external memory 130. Digital accelerator 280 can further include controller 206 that c

DCiM macro 202 can have X rows and Y columns of compute-in-memory cells. For example, DCiM macro 202 can have dimensions X by Y by B, where X and Y represent the crossbar array dimensions, and B represent the memory word size. Exemplary values for B can be 1, 2, 4, 6, 8, 12, or 16. In one example, DCiM macro 202 can have X=128 rows and Y=32 columns of compute-in-memory cells, and where each compute-in-memory cell stores a B=8-bit memory word (e.g., an 8-bit weight). DCiM macro 202 is divided into P number of sub-macros 204 or arranged as P number of sub-macros 204.

P refers to the partitioning factor. In some examples herein, P=4, and thus DCiM macro 202 includes P=4 sub-macros. DCiM macro 202 is subdivided along the row dimension, and thus DCiM macro 202 is divided into P number of X/P by Y by B sub-macros. A sub-macro of P number of sub-macros 204 can have X divided by P (X/P) rows and Y columns of compute-in-memory cells, e.g., the sub-macro can have dimensions X/P by Y by B. In one example, a sub-macro of P number of sub-macros 204 can have X/P=128/4=32 rows and Y=32 columns of compute-in-memory cells, and where each compute-in-memory cell stores a B=8-bit memory word (e.g., an 8-bit weight).

In the examples herein, P divides DCiM macro 202 into sub-macros along the row dimension, because DCiM macro 202 performs summing along the column dimension. It is envisioned that P can equivalently divide DCiM macro 202 into sub-macros along the column dimension if DCiM macro 202 performs summing along the row dimension.

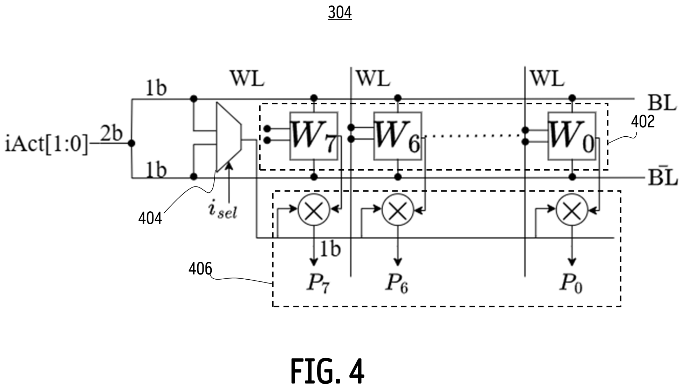

A compute-in-memory cell, which is depicted in greater detail in FIG. 4, can include a two-to-one (2:1) multiplexer to select one of two input activations to be multiplied with a weight stored in the compute-in-memory cell.

Natively, a compute-in-memory cell with a two-to-one multiplexer supports 1:2 structured sparsity. The two-to-one multiplexer utilizes a small transistor count and make use of just 1-bit of metadata storage to control the two-to-one multiplexer. To support flexible N:M sparsity, one or more components, e.g., input activation buffer 208, distribution network 210, merging network 216, and controller 206, are introduced to orchestrate the computations of the P number of sub-macros 204. In particular, P number of sub-macros 204 can be grouped together and activated according to the N:M sparsity pattern.

Suitable input activations can be buffered to distribution network 210 according to the N:M sparsity pattern by input activation buffer 208. Suitable input activations can be selected by distribution network 210 and sent to appropriate sub-macros according to the N:M sparsity pattern.

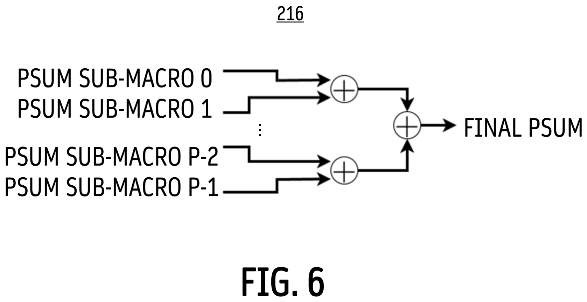

P number of sub-macros 204 can calculate partial sums along the columns of the sub-macros 204. P number of sub-macros 204 can include partial sum buffers 212 respectively to store partial sums calculated by individual columns of the sub-macro. Partial sums produced by P number of sub-macros 204, e.g., stored in respective partial sum buffers 212, can be appropriately added by merging network 216 according to the N:M sparsity pattern. Merging network 216 is depicted in greater detail in FIG. 6.

Each P number of sub-macros 204 functions independently of each other to support 1:2 sparsity, while input activation buffer 208 and distribution network 210 can orchestrate multiple neighboring sub-macros of the P number of sub-macros 204 to operate together to support different N:M sparsity patterns.

Input activation buffer 208 can buffer the input activations according to N and M. Depending on N and M, the input activations buffered by input activation buffer 208 can be arranged differently. Input activation buffer 208 is responsible for feeding or streaming input activations to distribution network 210 according to N and M. Distribution network 210 can receive the input activations from input activation buffer 208. Distribution network 210 can select appropriate input activations to be fed to the P number of sub-macros 204. Merging network 216 can sum P partial sums computed by the P number of sub-macros 204. The summing can be performed by merging network 216 can be based on which sub-macro(s) of the P number of sub-macros 204 are activated to support the N:M sparsity pattern.

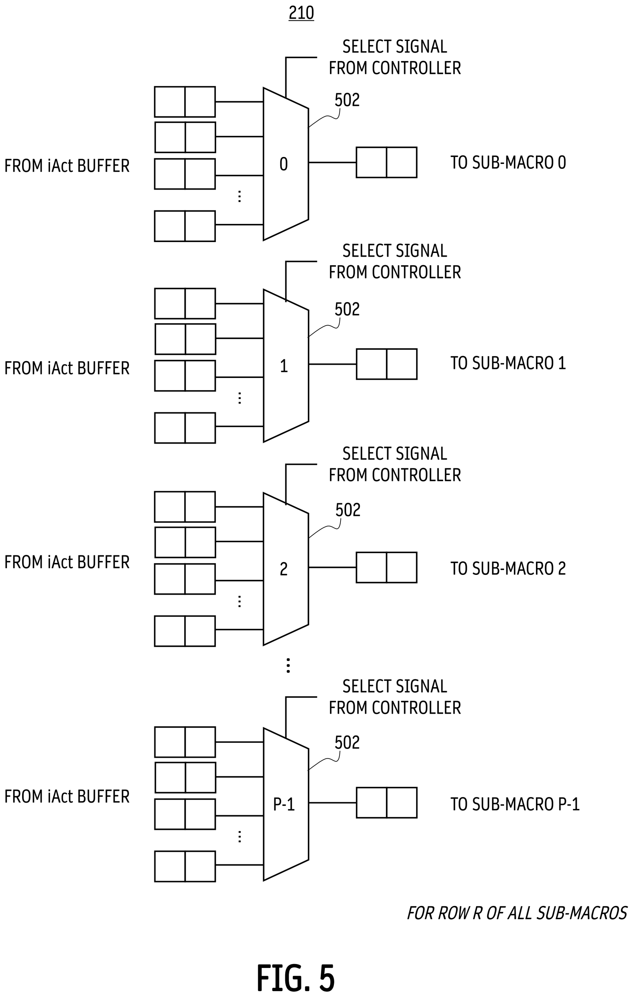

Distribution network 210 can include P number of P-to-one multiplexers with P outputs to the P number of sub-macros 204 respectively. The P number of P-to-one multiplexers, which is depicted in greater detail in FIG. 5, can be provisioned for rows at a same row position (e.g., rows that are spatially identical to each other within the P number of sub-macros 204) in the P number of sub-macros 204. For example, the rows at position 0 of the P number of sub-macros 204 can share the P number of P-to-one multiplexers. Phrased differently, distribution network 210 can have X/P sets of P number of P-to-one multiplexers, e.g., one set of P number of P-to-one multiplexers per spatially identical row of sub-macros 204. As illustrated in FIG. 5, a P-to-one multiplexer has P inputs and an output to output two selected input activation words (or a selected pair of input activation words). An input receives two input activation words (or a selected pair of input activation words).

Memory interface 136 can interface with external memory 130 to write input activations into input activation buffer 208. Memory interface 136 can interface with DCiM macro 202 to write weights to the compute-in-memory cells of DCiM macro 202. Memory interface 136 can interface with output activation buffer 140 to write output activations to external memory 130.

Digital accelerator 280 can include controller 206. Controller 206 may receive metadata encoding coordinates of non-zero or dense weights from external memory 130 via memory interface 136 and generate selection signals for distribution network 210 based on the metadata. In some cases, the selection signals for distribution network 210 are generated based on N and M of the sparsity pattern.

In some embodiments, controller 206 may generate selection signals for the two-to-one multiplexers in the P number of sub-macros based on the metadata. In some cases, the selection signals for the two-to-one multiplexers in the P number of sub-macros are generated based on N and M of the sparsity pattern.

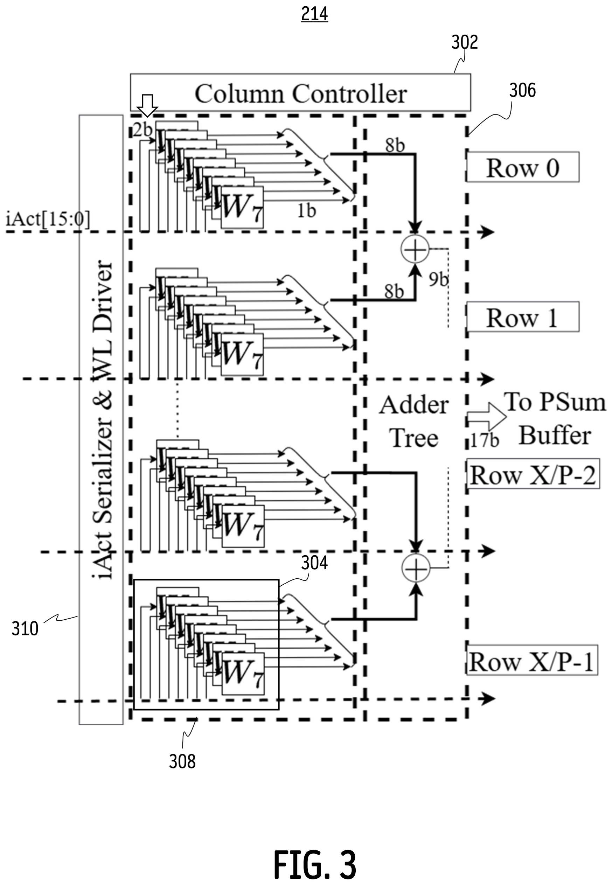

A sub-macro of the P number of sub-macros can include Y columns. A column of a sub-macro, e.g., column 214, is depicted in greater detail in FIG. 3.

The FlexCiM design is modular, and any value of P can be used. The higher value for P, higher values of M of the N:M sparsity pattern can be supported.

In one implementation, P=4. DCiM macro 202 can include four sub-macros 204. Distribution network 210 can include four four-to-1 (4:1) multiplexers, each multiplexer to route input activations to a corresponding sub-macro. Each sub-macro supports 1:2 sparsity. In a base case of 1:2 sparsity, each four-to-one multiplexer in the distribution network gets a pair of input activations at one of the inputs, and the pair of input activations are directly routed to the corresponding sub-macro. Once the two pair of input activations reach the sub-macro, the two-to-one multiplexer of the compute-in-memory cell selects one of the two input activations based on the stored 1-bit metadata. Once the sub-macros finish the co216216mputations, merging network 216, which includes a four-input adder tree for each column of DCiM macro 202, or Y number of four-input adder trees corresponding to the Y columns of DCiM macro 202, adds up the partial sums or contributions of each sub-macro together.

To support different N:M sparsity patterns, the grouping or orchestration logic followed by input activation buffer 208, distribution network 210, and merging network 216 can be summarized as follows. N of the N:M sparsity pattern denotes the number of sub-macros that would work together to process one block of M. Since the sub-macros 204 are identical, each spatially identical location of the sub-macros 204 can process the same block of M. In other words, N specifies the number of identical sets of input activations (arranged in pairs) that is received by the P number of P-to-one multiplexers. N identifies the number of sub-macros in P number of sub-macros 204 that are grouped or aggregated together to process the same block M. If N is greater than 1, multiple P-to-one multiplexers will receive the same set of input activations. M of the N:M sparsity pattern denotes the number of input activations to buffer to the P inputs of each P:1 multiplexer in the distribution network 210. In other words, M specifies the number of input activations (arranged in pairs) handled or received by each P-to-one multiplexer in distribution network 210.

For example, in the base 1:2 sparsity pattern scenario, each P-to-one multiplexer can receive two input activations or one pair of input activations at an input of the P-to-one multiplexer respectively, since M=2. The two input activations can be buffered to one P-to-one multiplexer, since N=1. Two further input activations can be buffered to a further P-to-one multiplexer, and so on. In other words, one sub-macro is activated to process the block of two input activations. By default, the P-to-one multiplexer passes the two input activations received at an input of the P-to-one multiplexer to a corresponding sub-macro, where the P-to-one multiplexer does not perform selection based on metadata encoding coordinates of the non-zero or dense weights. Based on the metadata encoding coordinates of dense or non-zero weights, the compute-in-memory cell of a sub-macro can, using the two-to-one multiplexer via its 1-bit selection signal, selects the appropriate input activation to perform computation with the loaded weight.

For example, in 2:4 sparsity pattern scenario, each P-to-one multiplexer can receive four input activations or two pairs of input activations at two inputs of the P-to-one multiplexer respectively, since M=4. The same set of four input activations can be buffered to two P-to-one multiplexers, since N=2. In other words, a group of two sub-macros are activated to process the same block of four input activations together. Spatially identical compute-in-memory cells within the two grouped sub-macros would work together to process the same block of four input activations. The spatially identical compute-in-memory cells in the two sub-macros that process a block of four input activations receive two corresponding non-zero or dense weights. Since M=4, each P-to-one multiplexer receives four input activations. Based on the metadata encoding coordinates of dense or non-zero weights, each P-to-one multiplexer selects a single pair of input activations and directs the pair of input activations to a corresponding sub-macro. The selection performed by P-to-one multiplexer can be based on a selection signal having one or more bits. If P=4, then the selection signal has two bits to indicate which one of the P inputs of the P-to-one multiplexer is to be selected and output to the corresponding sub-macro. Based on the metadata encoding coordinates of dense or non-zero weights, the compute-in-memory cell of a sub-macro can, using the two-to-one multiplexer via its 1-bit selection signal, selects the appropriate input activation to perform computation with the loaded weight.

Dense operations (e.g., no sparsity) can be supported or maintained in addition to flexible N:M sparsity.

In some embodiments, dense operations can be supported as if the sparsity pattern is 2:2. Each P-to-one multiplexer can receive two input activations or one pair of input activations at an input of the P-to-one multiplexer, since M=2. The same two input activations can be buffered to two P-to-one multiplexers, since N=2, thus mapping the same two input activations to two sub-macros. In other words, two sub-macros can be activated to process the block of two input activations. By default, the P-to-one multiplexer passes the two input activations received at an input of the P-to-one multiplexer to a corresponding sub-macro, where the P-to-one multiplexer does not perform selection based on metadata encoding coordinates of the non-zero or dense weights. The two-to-one multiplexer in the sub-macro can select one of the pair of input activations for processing, and the other two-to-one multiplexer in the sub-macro can select the other one of the pair of input activations for processing.

In some embodiments, dense operations can be supported as if the sparsity pattern is 1:1. Each P-to-one multiplexer can receive two instances of a same input activation or one pair of the same input activation at an input of the P-to-one multiplexer, since M=1. The two instances of the same input activation can be buffered to one P-to-one multiplexer, since N=1, thus mapping one input activation word to one sub-macro. The two instances of a further same input activation can be buffered to a further P-to-one multiplexer. In other words, one sub-macro can be activated to process one input activation. By default, the P-to-one multiplexer passes the two instances of the same input activation received at an input of the P-to-one multiplexer to a corresponding sub-macro, where the P-to-one multiplexer does not perform selection based on metadata encoding coordinates of the non-zero or dense weights. The two-to-one multiplexer in the sub-macro can select either one of the two instances of the same input activation for processing based on a "don't-care" selection signal.

Notably, in the 1:2 sparsity pattern base case, and dense inference case, the P-to-one multiplexers in the distribution network do not perform selection. In the dense inference case, the same input activations are streamed along both bit-lines and the selection signal of the two-to-one multiplexer is a "don't-care" selection signal.

When M=8, sparsity selection information can be encoded using three bits of information. When M=4, sparsity selection information can be encoded using two bits of information. When M=2, sparsity selection information can be encoded using one bit of information. The two-to-one multiplexers in the compute-in-memory cells utilizes a one bit selection signal, or one bit of the sparsity selection information, to select between two input activations when supporting all N:M patterns. The remaining bit(s) of the sparsity selection information is applied in distribution network 210 to support the N:M pattern.

FIG. 3 illustrates column 214 of a sub-macro, according to some embodiments of the disclosure. Column 214 illustrates a column of compute-in-memory cells 308 of a sub-macro of P number of sub-macros 204 of FIG. 2. Column 214 can include column controller 302, and X/P number of compute-in-memory cells 308, input activation serializer and word-line (WL) driver 310. In the example shown, each compute-in-memory cell of the compute-in-memory cells 308 stores an 8-bit memory word, e.g., an 8-bit weight.

X/P number of compute-in-memory cells 308 in column 214 can perform X/P number of multiplications of input activations and weights in parallel. Memory cell 304 is depicted in greater detail in FIG. 4. Each compute-in-memory cell of compute-in-memory cells 308 can perform bit-wise multiplication streamed input activation bits from input activation serializer and WL driver 310.

The results of the multiplications produced by compute-in-memory cells 308 of column 214 are summed (or accumulated) using adder tree 306 to produce a partial sum. Adder tree 306 can be a column-wise adder tree. Adder tree 306 may be an X/P-input adder tree, such as a 32-input adder tree. The partial sum can be stored in partial sum buffers 212 of FIG. 2.

Subdividing the DCiM macro 202 into P number of sub-macros 204 has an added benefit that adder tree 306 to add the X/P number of multiplications together is far smaller than the adder tree used to add the X number of multiplications together in an undivided DCiM macro. The complexity of an adder tree for an undivided DCiM macro is X*log(X), and the complexity of the adder tree 306 for the P number of sub-macros 204 is Xlog(X/P). Reducing the size of the adder tree in the partitioned design can significantly reduce area and lower power consumption over the undivided DCiM macro design.

Input activation serializer and WL driver 310 can output signals onto the word-lines of compute-in-memory cells 308 to switch the memory cell states to enable operations such as write, read, and erase of the memory elements and control the digital circuits in the compute-in-memory cells 308 to perform in-memory computation.

Column controller 302 can output selection signals for the two-to-one multiplexers of column 214. The selection signals for the two-to-one multiplexers of the given column of memory cells can be generated by column controller 302 based on metadata encoding coordinates of dense weights. Column controller 302 can be dedicated to generating the selection signals for the two-to-one multiplexers in a given column 214.

In some embodiments, column controller 302 can output control signals to enable compute-in-memory cells 308 of column 214 to be in a memory mode or a compute mode. The control signals can be generated based on a column enable signal, e.g., *EN_COL*. Compute-in-memory cells 308 of column 214 can share the same column enable signal.

FIG. 4 illustrates compute-in-memory cell 304 of a sub-macro having two-to-one multiplexer 404, according to some embodiments of the disclosure. Compute-in-memory cell 304 can include B number of memory elements 402 to store a B-bit memory word. B number of memory elements 402 can include B number of bit-cells. In some embodiments, B number of memory elements 402 is implemented using 28nm latched-based memory cell structurally resembling a 6T SRAM cell.

Compute-in-memory cell 304 can have two bit-lines, $BL$ and $\overline{BL}$. The two bit-lines are shared by the B number of memory elements 402. Compute-in-memory cell 304 can have two word-lines, $WL$ and $\overline{WL}$. The two word-lines are shared by the X/P number of memory elements in a column of compute-in-memory cells.

Compute-in-memory cell 304 can have two-to-one multiplexer 404 to receive two input activations. Input activations are bit-serialized, thus two-to-one multiplexer 404 receives two input activation bits at a time, or iAct [1:0], and output a selected input activation bit. Two-to-one multiplexer 404 can be controlled by a selection signal, or a selection bit $i_{sel}$. The B number of memory elements 402 share the same two-to-one multiplexer 404. The two-to-one multiplexer 404 selects one of the two input activation bits to be streamed to bit-serial multiplier circuit 406. Two-to-one multiplexer 404 enables 1:2 structured sparsity as a baseline case.

Compute-in-memory cell 304 can further include bit-serial multiplier circuit 406 to multiply a selected one of the two input activations and the weight. Bit-serial multiplier circuit 406 can include bit-wise AND operators to perform bit-wise AND operations between a bit of the memory word and streamed bits of the input activation. The bit-wise AND operation results are weighted by the bit position and accumulated to form a multiplication result of an input activation and a weight. In some embodiments, bit-serial multiplier circuit 406 may be implemented using NOR gates to perform the multiplication between the selected input activation bit and a weight bit.

Compute-in-memory cell 304 can have two modes of operation: a memory mode and a compute mode. Read and write operations of the B number of memory elements 402 are performed during memory mode. Write-lines, e.g., $WL$ and $\overline{WL}$, can be activated to access all the X/P number of memory elements in a column of compute-in-memory cells while bit-lines, e.g., $BL$ and $\overline{BL}$, are used to read/write data onto the B number of memory elements 402. Bit-serial multiplier circuit 406 performs compute operations during compute mode. Compute mode can be enabled for all the X/P number of memory elements in a column of compute-in-memory cells when $WL = 0$, and a corresponding column enable signal enables the column to perform compute operations, e.g., $EN\_COL = 1$.

FIG. 5 illustrates an implementation of distribution network 210 comprising P number of P-to-one multiplexers 502, according to some embodiments of the disclosure. Distribution network 210 illustrates a set of P number of P-to-one multiplexers 502 that can be used for rows that are spatially identical to each other within the P number of sub-macros 204 of FIG. 2. The set can be provided for row R of all the sub-macros 204. The P number of P-to-one multiplexers 502 serve the individual P number of sub-macros respectively.

A P-to-one multiplexer of the P number of P-to-one multiplexers 502 can have P inputs and one output. A pair of input activations can be fed to an input, and a pair of selected input activations can be directed to row R of a corresponding sub-macro. The select signal for the P-to-one multiplexer can be generated by a controller, such as controller 206 of FIG. 2.

Distribution network 210 is responsible for feeding appropriate pairs of input activations to the sub-macros according to N and M of the N:M sparsity pattern. The P inputs of the P-to-one multiplexer is loaded with pair(s) of input activations based on M. N sets of P number of P-to-one multiplexer in distribution network 210 are loaded with the same M number of input activations.

The output of the P-to-one multiplexer has a selected pair of input activations since the compute-in-memory cells support 1:2 sparsity pattern. In embodiments where the input activations are represented by 8-bit words, the P inputs and the output of the P-to-one multiplexer has a bit width of 16 bits to pack two 8-bit input activations together.

The selection of the appropriate pair of input activations performed by P number of P-to-one multiplexers 502 is controlled or dictated by the metadata encoding coordinates of dense or non-zero weights. Distribution network 210 abstracts the complexity of supporting large multiplexers in the compute-in-memory cells by performing the selection on M number of input activations at a global level, effectively selecting the correct/appropriate pair of input activations to be fed to the compute-in-memory cells.

FIG. 6 illustrates an implementation of merging network 216 comprising an adder tree, according to some embodiments of the disclosure. Due to the partitioned scheme of FlexCiM, the partial sums computed for each column of the sub-macros can be accumulated or added together by merging network 216. Merging network 216 can include a P-input adder tree that reads partial sums from corresponding partial sum buffers of the sub-macros and output a final partial sum.

*Row pipelining and column pipelining in FlexCiM*

Referring briefly back to FIG. 2, input activation buffer 208 has a limited bandwidth. In practice, input activation buffer 208 can buffer a certain number of input activations for a given clock cycle, e.g., 1024 bits/cycle, or 128 8-bit input activations. For dense LLM inference, X (e.g., X=128) input activations can be streamed or buffered to a column, and X parallel MAC operations can be performed by the compute-in-memory cells of the column. However, for sparse inference with a highest sparsity ratio, e.g., 1:8 sparsity pattern in some implementations, the P-to-one multiplexers for a row choose from eight input activations, which translates to 1024 input activations to be streamed to a column. Considering the upper limit of the bandwidth constraint of input activation buffer 208, during 1:8 sparse inference, just four rows of a column can perform parallel MAC operations, just eight rows for 1:4 sparse inference, and just 16 rows for 1:2 sparse inference.

Because the compute-in-memory cells perform bit-serial multiplication, the MAC operation itself can take a number of cycles, e.g., 8 cycles. An opportunity arises to perform row pipelining by overlapping computation cycles with memory access cycles.

Row pipelining is a technique used to improve throughput in bit-serial compute-in-memory systems. In architectures like FlexCiM, due to bandwidth constraints of input activation buffer 208, especially under high sparsity patterns like 1:8-not all rows can be fed input activations simultaneously or in one cycle. Row pipelining solves this issue by dividing the rows into smaller groups and buffering input activations to them in stages, e.g., over multiple clock cycles. The number of row pipeline stage (#stages) can be equal to X divided by the number of rows grouped together, e.g., #stages=X/#rows_grouped. Input activation buffer 208 buffers the input activations in pairs to distribution network 210 over a plurality of clock cycles. During a clock cycle, input activations are buffered by input activation buffer 208 to a subset of the distribution network corresponding to a group of row(s) of the P number of sub-macros. The subset of the distribution network meaning the set(s) of P number of P-to-one multiplexers that are serving the group of row(s).

Consider an implementation of DCiM macro 202 with X=32 rows and a 1:8 sparsity pattern. Each row takes eight input activations, but input activation buffer 208 may only have bandwidth to feed four rows per cycle. Row pipelining groups the 32 rows into eight sets of four, e.g., #rows_grouped=4, #stages=X/#rows_grouped=32/4=8. In each cycle, one group of rows (e.g., a set of four rows) in an activated column (e.g., _EN_COL_ = 1) are fed input activations. In the first clock cycle, a group of four rows (e.g., the corresponding P sets of P-to-one multiplexers serving the four rows) are fed with input activations, and in the second clock cycle, a further group of four rows (e.g., the corresponding P sets of P-to-one multiplexers serving the four rows) are fed with further input activations, and so on. The 32 rows are fed input activations in groups of four rows over eight clock cycles, or in eight row pipelined stages.

The eight clock cycles to buffer input activations can overlap with computation cycles. This overlapping of memory accesses and computation ensures that the pipeline remains full, and no cycles are wasted.

Over #stages of clock cycles, the input activations are fed to rows of a particular column in groups. The column can be activated or enabled by the column enable signal _EN_COL_ = 1 for #stages of clock cycles. At the end of the #stages of clock cycles, the next/adjacent column to the column is activated using the column enable signal _EN_COL_ = 1 for the next #stages of clock cycles. Once all columns have been fed with input activations (one by one), the first column is reactivated using the column enable signal _EN_COL_ = 1 and the process is repeated. This process implements column pipelining, where input activations are fed to a column one at a time.

Column pipelining is a technique used to reduce hardware overhead associated with distribution network 210 and improve throughput in DCiM systems. Without column pipelining for FlexCiM, each column would utilize a dedicated distribution network 210, which would be prohibitively expensive for memory-centric designs. Phrased differently, feeding input activations to all columns simultaneously would demand a dedicated distribution network 210 for each column, which is costly in terms of area. Column pipelining solves this problem by time-multiplexing a shared distribution network 210 across columns. Input activation buffer 208 buffers the input activations in pairs to distribution network 210 over a plurality of time periods, wherein during a time period, input activations are buffered to a column of the P number of sub-macros (e.g., an active column enabled by the column enable signal _EN_COL_ = 1). The input activations are buffered by input activation buffer 208 to P sets of P-to-one multiplexers serving all of the rows. Input activation buffer 208 thus buffers input activations to one column at a time. A time period can include an amount of time for input activation buffer 208 to buffer input activations to a column. A time period can be #stages of clock cycles, where input activation buffer 208 may perform row pipelining within the active column.

The columns in FlexCiM architecture are activated sequentially. Over the time period, one column is fed input activations by input activation buffer 208, and during the next time period, the column can perform computation and an adjacent column is fed input activations by input activation buffer 208. The time period can include a fixed number of cycles, which can be determined by the bit-serial MAC operation latency. Effectively, distribution network 210 can serve multiple columns over time, rather than duplicating hardware for each.

Row pipelining and column pipelining allow FlexCiM to maintain high throughput and energy efficiency while supporting flexible N:M sparsity in a compact compute-in-memory design.

Controller 206 of FIG. 2 and column controller 302 of FIG. 3 can generate control signals that manage row pipelining and column pipelining of P number of sub-macros 204. Controller 206 can generate selection signals to the P-to-one multiplexers in distribution network 210. Column controller 302 can generate selection signals to the two-to-one multiplexers in the compute-in-memory cells of P number of sub-macros 204.

_Sparsity storage format and walkthrough examples: 1:4 sparsity pattern and 4:8 sparsity pattern_

The FlexCiM architecture utilizes Compressed Sparse Column (CSC) format as a storage format for sparse weights with N:M sparsity pattern. Each column of weights can be stored as a list having all the dense or non-zero weight values, and the locations, positions, or coordinates of the N dense or non-zero weight values within a block of size M can be stored as corresponding metadata. This metadata informs DCiM macro 202 of FIG. 2 to identify which weights are dense or non-zero and where they reside, allowing selective or sparse computation without performing computations for zero-valued weights. In particular, the metadata can be used to generate selection signals for the P-to-one multiplexers and the two-to-one multiplexers of DCiM macro 202. Moreover, the metadata can be used to inform merging network 216 on merging partial sums from grouped sub-macros.

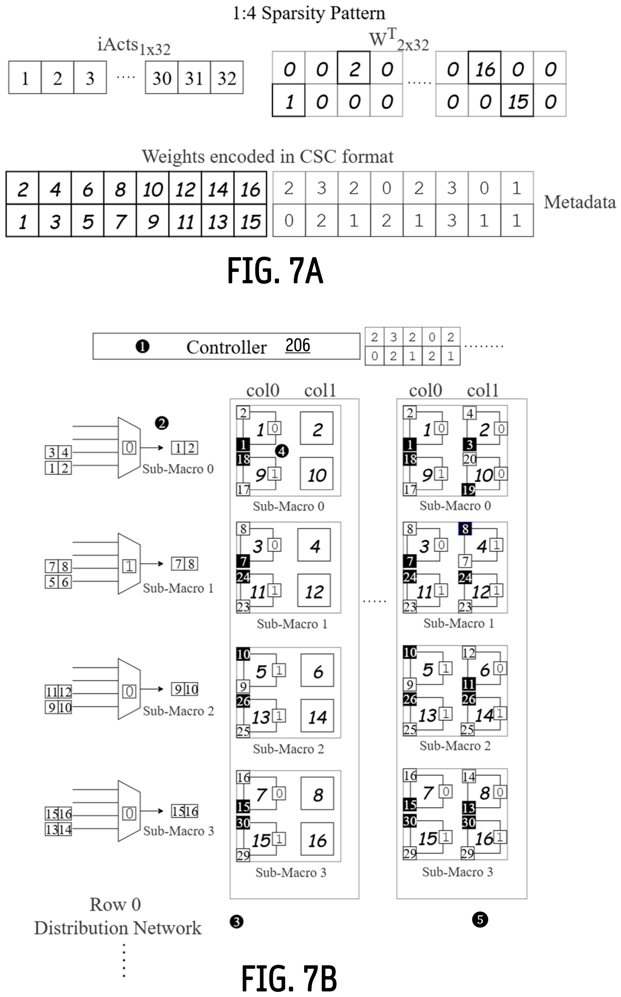

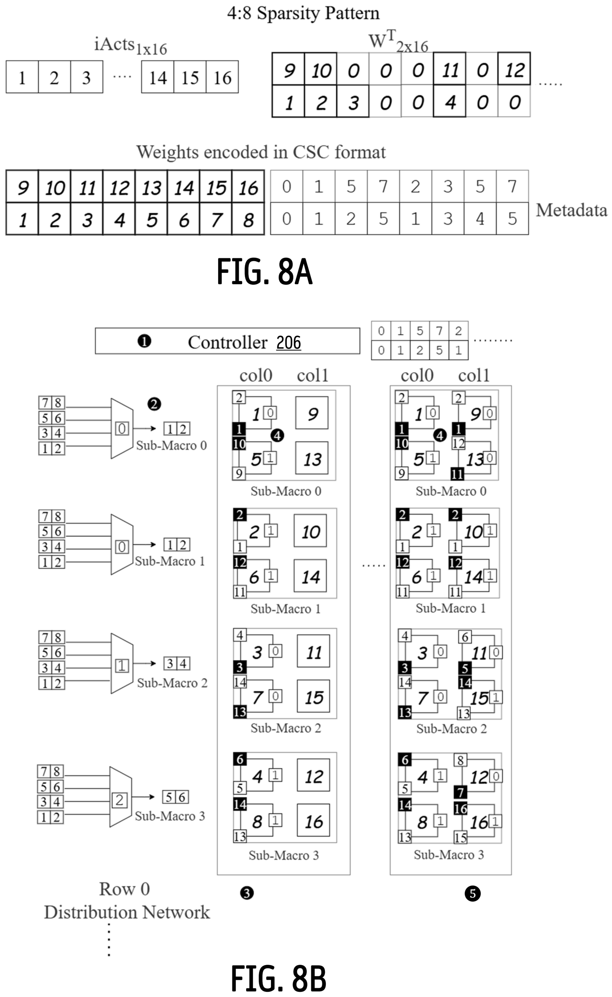

FIGS. 7A-B illustrates a walkthrough example implementing 1:4 sparsity pattern, according to some embodiments of the disclosure. FIGS. 8A-B illustrates a walkthrough example implementing 4:8 sparsity pattern, according to some embodiments of the disclosure.

Operations are marked as circled numbers, ❶,❷,❸,❹,

and ❺. The walkthrough examples demonstrate how FlexCiM can be configured to support flexible N:M sparsity patterns.

For illustration, the partition factor P=4, and DCiM macro has P=4 sub-macros, e.g., sub-macro 0, sub-macro 1, sub-macro 2, and sub-macro 4. For simplicity, P=4 number of P-to-one (e.g., four-to-one) multiplexers for row 0 is depicted. It is envisioned that other sets of four four-to-one multiplexers are provided as part of the distribution network for other rows. For illustration, the sub-macro has two rows and two columns. It is envisioned that the sub-macro can be generalized to have X/P rows and Y columns.

For the 1:4 sparsity pattern illustrated in FIGS. 7A-B, each sub-macro operates independently on a block of four weights, with one dense or non-zero weight retained per block. Each four-to-one multiplexer for row 0 corresponding to four sub-macros receives distinct four input activations (e.g., two pairs of input activations). Metadata associated with the sparse weight tensor (as depicted in FIG. 7A), encoded in CSC format, specifies the position of the non-zero weight within each block of four weights.

For the 4:8 sparsity pattern illustrated in FIGS. 8A-B, four sub-macros are aggregated to process a single block of eight weights, with four non-zero weights retained. An input buffer buffers the same set of eight input activations (e.g., four pairs of input activations) to spatially identical rows or locations in the four sub-macros. Each four-to-one multiplexer for row 0 to four sub-macros receives the same eight input activations (e.g., four pairs of input activations). Metadata associated with the sparse weight tensor (as depicted in FIG. 8A), encoded in CSC format, specifies the position of the non-zero weight within each block of eight weights.

In operation ❶, controller 206 receives meta-data encoding the coordinates of dense or non-zero weights and generates selection signals for the four-to-one multiplexers in the distribution network and the two-to-one multiplexers in the compute-in-memory cells accordingly. The least significant bit (LSB) of the metadata can be used to produce selection signals for the two-to-one multiplexers, and the remaining bits of the metadata can be used to produce selection signals for the four-to-one multiplexers. For M=4, the metadata has two bits. One LSB is used to produce selection signals for the two-to-one multiplexers, and one most significant bit (MSB) is used to produce selection signals for the four-to-one multiplexers. For M=8, the metadata has three bits. One LSB is used to produce selection signals for the two-to-one multiplexers, and two MSBs are used to produce selection signals for the four-to-one multiplexers.

In operation ❷, the four-to-one multiplexers in the distribution network for a row (e.g., row 0) selects the appropriate pair of input activations at one of the four inputs of the four-to-one multiplexer according to the selection signals generated by controller 206 and directs the pair of input activations to the corresponding sub-macro of a column (e.g., col0).

In operation ❸, the column (e.g., col0) is activated to receive pairs of input activations (e.g., *EN_COL* = 1) selected by the four-to-one multiplexers. A pair of input activations can be serialized and fed to bit-lines of a compute-in-memory cell. Row pipelining can be performed to feed input activations to one group of rows at a time.

In operation ❹, the two-to-one multiplexers of the column selects the appropriate input activation from the pair of input activations received at a compute-in-memory cell on the bit-lines according to the selection signals generated by controller 206. MAC operation is performed in the column.

In operation ❺, during the #stages of cycles where the MAC operation is performed in the column, an adjacent column can be activated to receive pairs of input activations (e.g., *EN_COL* = 1). Row pipelining can be performed to feed input activations to one group of rows at a time.

After the MAC operation is performed in the column, a merging network (not shown) can perform final partial sum accumulation by reading from the partial sum buffers (not shown) of each column as the partial sums of the column is calculated and produced.

In some implementations, the latency of the DCiM macro supporting 1:4 sparsity pattern is 1.63x lower than dense inference. In some implementations, the latency of the DCiM macro supporting 2:8 sparsity pattern is 1.42x lower than dense inference.

*Implementing DCiM architecture within a neural processing unit*

In some embodiments, DCiM macro 202 can be integrated within a neural processing unit as an accelerator to perform operations for a layer of a neural network that can be represented GEMM operation or MAC operations and support flexible N:M sparsity ratios. DCiM macro 202 can be implemented alongside or in parallel with a Von Neumann based digital accelerator having processing elements, where DCiM macro 202 can perform 8-bit integer (INT8) GEMM or MAC operations. A compiler producing machine-readable instructions for the neural processing unit can offload the GEMM or MAC operations of a layer onto DCiM macro 202 to be executed at a particular N:M sparsity ratio determined for the layer. The compiler can assign other types of operations such as element size operations, depthwise operations, and layer normalization operations to be performed by a Von Neumann based digital accelerator having processing elements.

*FLOW framework*

To further improve upon other weight pruning algorithms, the FLOW framework takes a unique approach to identify the optimal layer-wise N:M structured sparsity patterns that can balance accuracy degradation and efficient inference performance. The neural network that is pruned using the FLOW framework can be readily executed on digital accelerators supporting N:M sparsity patterns. The FLOW framework identifies layer-wise N:M patterns based on one or more factors, including outlier presence, outlier distribution (or outlier density or outlier clustered-ness), and latency/performance importance versus accuracy importance. Outliers can be determined using a suitable algorithm to identify weights which are outliers and may not be suitable to be pruned. In particular, the FLOW framework can be executed on the FlexCiM-based digital accelerator as described herein.

In some experiments, compared to other layer-wise N:M pruning techniques, FLOW can achieve 25-36% better pruned model performance at high sparsity ratios when tested on some DNN models.

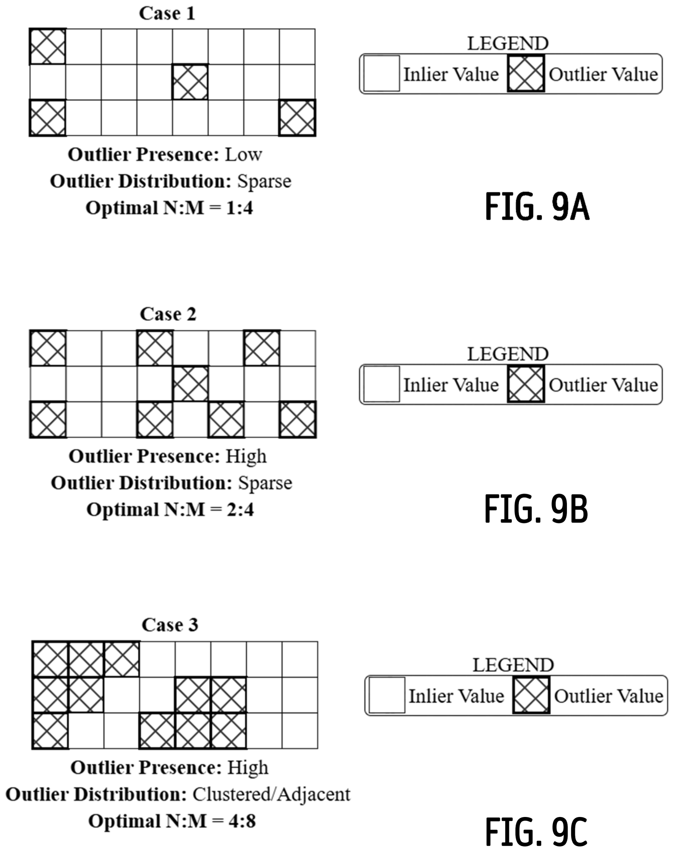

FIGS. 9A-C illustrates different optimal sparsity patterns for different outlier presence and outlier distributions, according to some embodiments of the disclosure.

In the example illustrated in FIG. 9A, outlier presence is low, and outlier distribution is sparse. An optimal N:M sparsity pattern can be 1:4.

In the example illustrated in FIG. 9B, outlier presence is high, and outlier distribution is sparse. An optimal N:M sparsity pattern can be 2:4. In particular, the value N for the example in FIG. 9B is higher relative to FIG. 9A to account for higher outlier presence.

In the example illustrated in FIG. 9C, outlier presence is high, and outlier distribution is clustered/adjacent. An optimal N:M sparsity pattern can be 4:8. In particular, the value for M for the example in FIG. 9C is higher relative to FIG. 9A and FIG. 9B to account for more clustered outlier distribution.

The illustrated examples of FIGS. 9A-C reveal that outlier distribution can play an important role in determining the optimal N:M sparsity pattern, in particular the value M. FLOW can favor a larger M value when outlier distribution is dense or clustered to minimize the possibility of pruning outliers within a block of M and maintain a higher degree of flexibility in deciding which weight to prune. Accounting for both N and M when assigning N and M values can result in significantly higher perplexity scores.

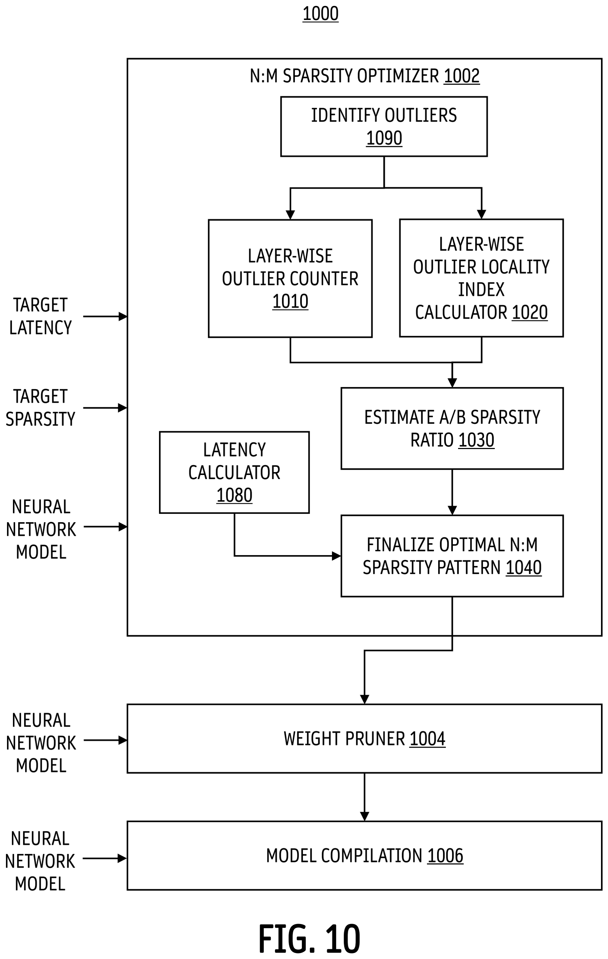

FIG. 10 illustrates a system 1000 to optimize N:M sparsity pattern and produce a sparse neural network, according to some embodiments of the disclosure. System 1000 can include N:M sparsity optimizer 1002, weight pruner 1004, and model compilation 1006.

N:M sparsity optimizer 1002 receive a neural network model, such as a definition of a neural network having a plurality of layers. The definition may specify the operations being performed in the layers and the inputs and outputs of the layers. The definition may include parameters of the layers, such as weight tensors. N:M sparsity optimizer 1002 can receive a target latency or latency goal. N:M sparsity optimizer 1002 can receive a target sparsity or sparsity ratio goal.

N:M sparsity optimizer 1002 may include identify outliers 1090 to identify outliers for the layer of a neural network. For illustration, N:M sparsity optimizer 1002 is focused on determining a N:M sparsity pattern for weights. Identify outliers 1090 identify weights of the neural network model which are outliers. Outliers may be identified using a suitable technique. Identify outliers 1090 can compute a statistical or functional score that reflects the atypicality of individual weight parameters relative to the overall distribution of weights within a layer or model.

Suppose a layer has weight tensor $W \in \mathbb{R}^{(C_{in} \times C_{out})}$ and receives input activations $X \in \mathbb{R}^{(T*K \times C_{in})}$. $T$ represents the number of tokens, and $K$ represents the sequence length. Identify outliers 1090 may assign an importance score $I_w = |W_{ij}| \cdot \|X_j\|_2$, to individual weights, with $\|X_j\|_2$ being the L2-norm of the input activations connected to the weight element. $I_w$ can act as a measure to identify outliers based on both weight and associated activation values. Based on the importance scores for the weights in the weight tensor for the layer, the mean $\mu$ and/or standard deviation $\sigma$ for the importance scores of the weights can be calculated for the layer. The mean $\mu$ and/or standard deviation $\sigma$ can be used to set a threshold to determine whether the weight element is an outlier or not. For example, the threshold can be set as a multiple of the standard deviation, e.g., $\tau \cdot \sigma$, where $\tau$ can be a hyper parameter. In some implementations, $\tau = 3$. In some implementations, $\tau = 5$. If a distance between the importance score of a weight element from

the mean $\mu$ is passes or exceeds the threshold, then the weight element is categorized or identified as an outlier.

In some embodiments, a weight element is classified as an outlier if its absolute magnitude of the score exceeds a computed threshold, such as a percentile-based cutoff or a multiple of the standard deviation from the mean score magnitude. The computed threshold for outlier classification may be layer-specific and sign-sensitive, allowing for fine-grained control over sparsity patterns and robustness to noise.

In some embodiments, the score may be computed as a function of the weight value. In some embodiments, the score may be computed as a joint function of the weight and its associated input activation, for example, by evaluating the product of the weight magnitude and the norm of the input activation vector. This joint score captures both static parameter importance and dynamic feature relevance, enabling selective pruning of weights that contribute minimally to model output while preserving those linked to high-activation pathways.

N:M sparsity optimizer 1002 can include layer-wise outlier counter 1010. Layer-wise outlier counter 1010 can determine a count of the identified outliers. Layer-wise outlier counter 1010 can quantify outlier presence for a given layer. Outlier presence can differ from one layer to another. Outlier presence can be quantified based on the number of outliers in each layer.

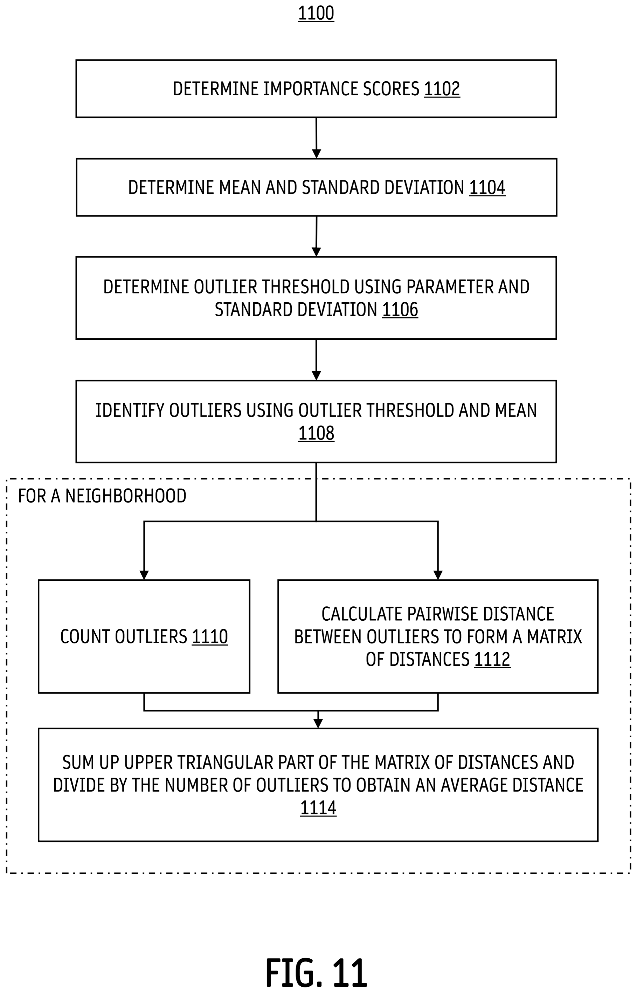

N:M sparsity optimizer 1002 can include layer-wise outlier locality index calculator 1020. Layer-wise outlier locality index calculator 1020 can determine a locality measure of the identified outliers. Layer-wise outlier counter 1010 can quantify outlier distribution (e.g., density and/or cluster-ness) for a given layer. Outlier distribution can differ from one layer to another. Outlier distribution can be quantified based on whether the outliers that are close or clustered together and/or based on whether the outliers are sparsely distributed or spaced far away from each other. An exemplary algorithm is detailed in FIG. 11.

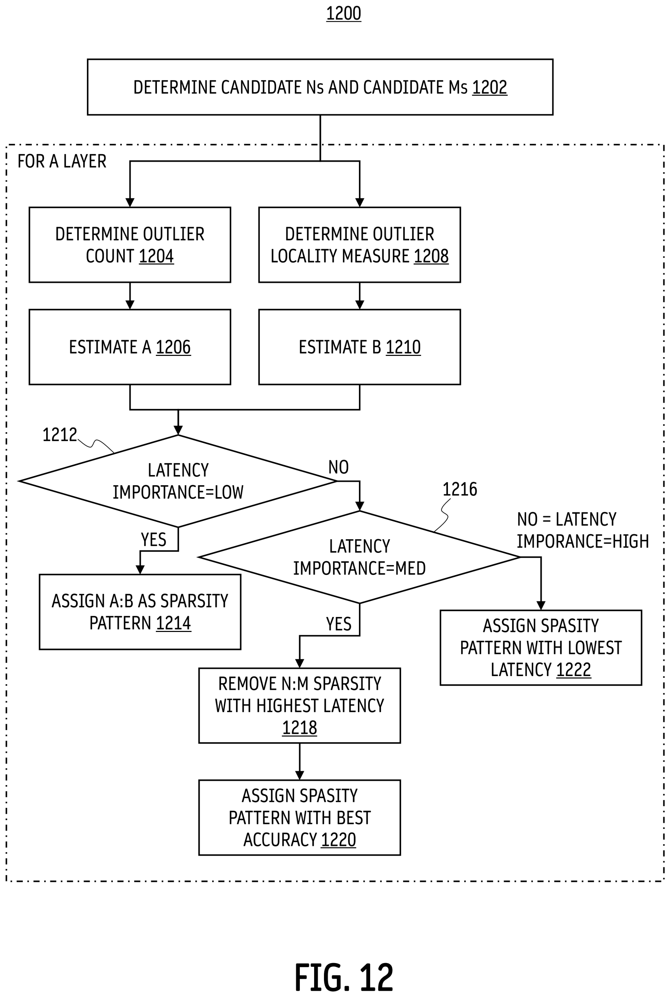

N:M sparsity optimizer 1002 can include estimate A/B sparsity ratio 1030. Estimate A/B sparsity ratio 1030 can determine the value A of the A/B sparsity ratio based on the count determined by layer-wise outlier counter 1010. Based on outlier presence, such as the count, estimate A/B sparsity ratio 1030 can determine the value A in the A/B sparsity ratio that causes minimal accuracy degradation. Higher outlier presence can lead to a higher value for A. Estimate A/B sparsity ratio 1030 can determine the value B of the A/B sparsity ratio based on the locality measure. Based on outlier distribution such as the locality measure, estimate A/B sparsity ratio 1030 can determine e the value B in the A/B sparsity ratio that causes minimal accuracy degradation. Dense or more clustered outlier distribution can lead to a higher value for B. Determining the value A and the value B in the A/B sparsity ratio is detailed in FIG. 12.

N:M sparsity optimizer 1002 can include finalize optimal N:M sparsity pattern 1040. Finalize optimal N:M sparsity pattern 1040 can assign a sparsity pattern of N:M for the layer based on the sparsity ratio A/B. Based on the identified sparsity ratio of A/B, Finalize optimal N:M sparsity pattern 1040 can determine one or more N:M sparsity patterns that preserves the identified sparsity ratio of A/B. Finalize optimal N:M sparsity pattern 1040 can take into account latency/performance importance versus accuracy importance to choose or select the optimal N:M sparsity pattern out of the candidate N:M sparsity patterns that satisfy the A/B sparsity ratio. In particular, finalize optimal N:M sparsity pattern 1040 may quantify accuracy of a given sparsity pattern based on the value M. The higher the value M, the bigger the block of weights the pruning algorithm has to choose from for pruning, which reduces the risk of pruning outliers. In addition, finalize optimal N:M sparsity pattern 1040 can quantify latency of a given sparsity pattern based on the value M, or use latency calculator 1080 to analytically determine the latency of a given sparsity pattern when implemented on a particular digital accelerator supporting sparsity. Higher values M can lead to longer execution times when using the FlexCiM architecture because more input activations are buffered to a row for selection during a given clock cycle. Accuracy and/or latency of a given candidate sparsity pattern can be used to guide the selection an optimal N:M sparsity pattern from candidate N:M sparsity patterns, by weighing and balancing latency/performance importance versus accuracy importance. Finalizing the optimal N:M sparsity pattern based on candidate sparsity patterns is detailed in FIG. 12.

Based on the optimal N:M sparsity pattern determined by N:M sparsity optimizer 1002, weight pruner 1004 may prune weights of the layer according to the N:M sparsity pattern and determine and encode sparse weight tensors according to the N:M structured sparsity. Weight pruner 1004 may encode sparse weight tensors using the CSC format.

Based on the sparse weight tensors and the definition of the neural network model, model compilation 1006 can generate machine-readable instructions or configurations for the neural network according to the N:M sparsity pattern. Model compilation 1006 may package the pruned weights determined by weight pruner 1004 along with the machine-readable instructions or configurations for the neural network. The instructions or configurations can be loaded onto a processor, such as a neural processing unit with the FlexCIM-based digital accelerator, to cause the processor to execute operations of the neural network model.

FIG. 11 is a flow diagram illustrating method 1100 for determining a count of outliers and a locality measure of outliers, according to some embodiments of the disclosure. Method 1100 can be executed by N:M sparsity optimizer 1002 of FIG. 10. Method 1100 illustrates an exemplary implementation of a procedure for counting outliers and calculating a locality measure (e.g., a locality index). The count of outliers is an indication for outlier presence. The locality measure is an indication of outlier distribution (e.g., density or cluster-ness). A weight tensor W for a layer can be loaded. Optionally, representative input activations for the layer can be loaded.

In 1102, importance scores for weight elements of the weight tensor W can be determined. The importance score may be a function of the weight value. The importance score may be a function of the weight value and an associated input activations.

In 1104, a mean and a standard deviation may be determined based on the importance scores.

In 1106, an outlier threshold can be determined using the standard deviation and optionally a hyperparameter. The outlier threshold can be a multiple of the standard deviation. In some embodiments, the hyperparameter can be user provided. The outlier threshold can be used to identify a range of importance scores that would classify a weight element as an outlier and range of importance scores that would classify a weight element as an inlier.

In 1108, outliers can be identified using the outlier threshold and the mean.

Operations 1110, 1112, and 1114 can be performed for individual neighborhoods of a weight tensor, such as a 128x128 neighborhood of elements. The weight tensor can be partitioned into a number of neighborhoods of elements or non-overlapping blocks of elements.

In 1110, a count of the outliers can be determined. The count can be determined for individual neighborhoods and aggregated/averaged across the neighborhoods to represent outlier count or presence of the layer. The count can be determined across the whole weight tensor to represent outlier count or presence of the layer.

In 1112, pairwise distances (e.g., Euclidean distances) between outliers can be calculated in the neighborhood to form a matrix of distances.

In 1114, an upper triangular part of the matrix of distances can be summed, and the sum can be divided by the number of outliers to obtain an average distance measure for the neighborhood. The average distance measure for the individual neighborhoods can be aggregated to represent outlier distribution of the layer or the locality measure for the layer.

In some embodiments, for a weight tensor $l$, the outlier distribution $D^l$ can be computed to represent a proxy metric that measures the summation of the pairwise distance between the outliers averaged over the number of outliers:

$$D^l = \frac{\sum_1^{n_{C_2}} dist(o_k, o_j)}{n_{C_2}} \quad \textbf{(eq. 1)}$$

$dist(.)$ measures pairwise $L_1$ distances between two outliers, and $^n C_2$ is the total number of outlier pairs in a layer with n outliers. It is possible to compute a normalized outlier distribution ($ND$) through min-max normalization across all the layers:

$$ND^l = \frac{D^l - \min(\mathcal{D})}{\max(\mathcal{D})} \textbf{(eq. 2)}$$

$\mathcal{D}$ represents the set of outlier distributions $D^l$ of all the layers.

In some embodiments, $D_b^l$ is calculated for a neighborhood b within the weight tensor according to equation 1, and the outlier distribution is obtained by summing $D_b^l$ over the neighborhoods. The normalized outlier distribution $ND^l$ can be obtained using equation 2.

A higher $ND^l$ can indicate sparse distribution of outliers, or farther distances between outliers within a layer. A smaller $ND^l$ can indicate a large number of closely located or clustered outliers within the layer.

FIG. 12 is a flow diagram illustrating method 1200 for determining an optimal N:M sparsity pattern, according to some embodiments of the disclosure. Method 1200 can be executed by N:M sparsity optimizer 1002 of FIG. 10.

In 1202, candidate Ns and candidate Ms can be determined. For example, candidate Ns and candidate Ms can be powers of two. Candidate Ns can include {1, 2, 4, 8}, and M can include {2, 4, 8}.

Subsequent operations can be performed on a per layer basis.

In 1204, an outlier count can be determined for the layer, such as an outlier fraction or proportion.

In 1206, based on the outlier count, the value A of the sparsity ratio A/B can be estimated. Higher outlier count favors a higher valued A. The value A can be selected from the candidate Ns. The more outliers in the layer suggests that more non-zero elements (larger values of A) should be preserved for the layer.

In 1208, an outlier locality measure can be determined for the layer.

In 1210, based on the outlier locality measure, the value B of the sparsity ratio A/B can be estimated. Higher locality measure (indicating dense/clustered outliers) favors a higher valued B. The value B can be selected from the candidate Ms. The denser the outliers suggests that that bigger blocks (larger values of B) should be used when pruning to avoid pruning outliers.

A user may provide or set a latency importance category, which indicates whether latency/performance has a high priority, a medium/balanced priority, or a low priority, relative to model accuracy. The latency importance category can indicate a trade off between latency/performance and model accuracy.

In 1212, method 1200 checks whether latency/performance has a low priority relative to accuracy (e.g., latency importance = LOW or 0). When latency/performance has a low priority, accuracy of the model has a high priority. If yes, method 1200 proceeds to 1214. If no, method 1200 proceeds to 1216.

In 1214, the value A and value B can be set as the value N and the value M of the N:M structured sparsity pattern. In some cases, the sparsity pattern of N:M that has a highest value for M that preserves the sparsity ratio of A/B is chosen as the optimal N:M sparsity pattern. The sparsity pattern of N:M with the highest value for M can prioritize model accuracy over latency.

In 1216, method 1200 checks whether latency/-performance and accuracy have balanced priorities with each other (e.g., latency importance = MED or 1). In other words, latency/performance and accuracy of model have the same or equal priority. If yes, method 1200 proceeds to 1218. If no, method 1200 proceeds to 1222.

In 1218, the sparsity pattern of N:M that has the highest latency, e.g., a highest value for M, that preserves the sparsity ratio of A/B is removed from the candidate sparsity patterns. In 1220, the optimal sparsity pattern of N:M is determined from the one or more remaining candidate sparsity pattern having a highest value of M (e.g., the pattern that results in the least amount of accuracy degradation) that preserves the sparsity ratio of A/B. The removal operation in 1218 can ensure that latency/performance and accuracy priorities are given balanced or equal weightage.

Following the no path from 1216 means that latency/performance has a high priority relative to accuracy (e.g., latency importance = HIGH or 0). When latency/performance has a high priority, accuracy of the model has a low priority.

In 1222, the sparsity pattern of N:M that has a lowest value for M (e.g., the pattern that results in the lowest latency) that preserves the sparsity ratio of A/B is chosen as the optimal N:M sparsity pattern. The sparsity pattern of N:M with the lowest value for M can prioritize latency over model accuracy.

In some embodiments, the optimal N:M sparsity pattern for different layers of the model can be formulated as an integer linear programming problem. Weights can be given to latency/performance and accuracy. The integer linear programming problem can search the domain of possible N:M sparsity patterns for the layers of the model that would satisfy a target sparsity ratio for the overall model, ensure that $1 \leq N \leq M$ for a particular sparsity pattern, while aligning N to outlier count and M to outlier locality measure.

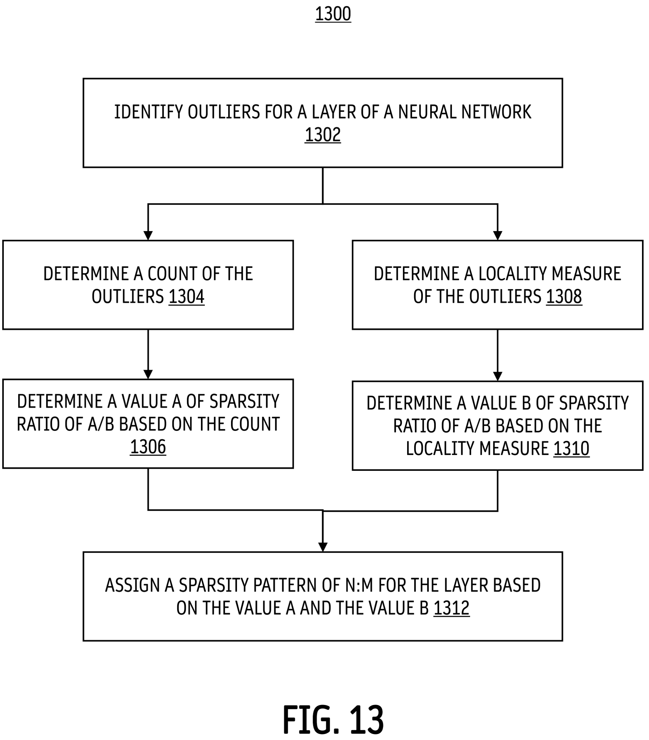

FIG. 13 is a flow diagram illustrating method 1300 for determining an optimal N:M sparsity pattern, according to some embodiments of the disclosure. Method 1300 can be performed by one or more components of system 1000.

In 1302, outliers for the layer of a neural network can be identified.

In 1304, a count of the outliers can be determined.

In 1308, a locality measure of the outliers can be determined. In some embodiments, the locality measure indicates how close or far apart the outliers are. In some embodiments, determining the locality measure includes calculating the locality measure based on one or more pairwise distances of the outliers within a neighborhood. In some embodiments, determining the locality measure includes calculating the locality measure based on an average of one or more pairwise distances of the outliers within a neighborhood.

In 1306, a value A of a sparsity ratio of A/B can be determined based on the count. In some embodiments, determining the value A of the sparsity ratio A/B includes setting the value A higher when the count is higher.

In 1310, a value B of the sparsity ratio of A/B can be determined based on the locality measure. In some embodiments, determining the value of B of the sparsity ratio of A/B includes setting the value B higher when the locality measure indicates that the outliers are more clustered than far apart.

In 1312, a sparsity pattern of N:M for the layer can be assigned based on the sparsity ratio of A/B.

In some embodiments, assigning the sparsity pattern includes determining the sparsity pattern of N:M having a lowest value for M that preserves the sparsity ratio of A/B.

In some embodiments, assigning the sparsity pattern comprises: determining the sparsity pattern of N:M having a highest value for M that preserves the sparsity ratio of A/B.

In some embodiments, assigning the sparsity pattern comprises: removing a candidate sparsity pattern having a highest latency, and determining the sparsity pattern of N:M from one or more remaining candidate sparsity patterns having a highest value for M that preserves the sparsity ratio of A/B.

In some embodiments, assigning the sparsity pattern includes assigning the sparsity pattern based on a latency importance category.

*Methods for accelerating operations of a neural network using the FlexCiM architecture*

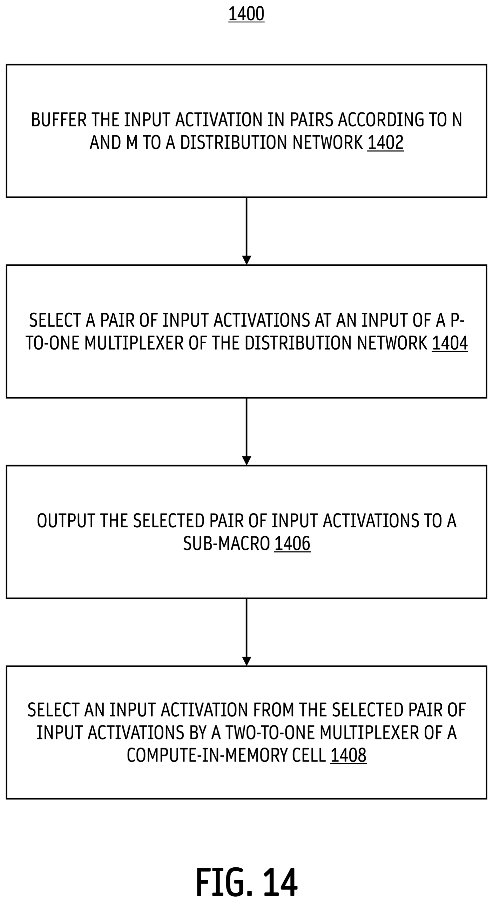

FIG. 14 is a flow diagram illustrating method 1400 for accelerating MAC operations of input activations and weights with an N:M sparsity pattern, according to some embodiments of the disclosure. Method 1400 can be carried out by digital accelerator 280 as illustrated in FIG. 2, implementing the FlexCiM architecture.

In 1402, the input activations are buffered to a distribution network in pairs according to N and M. In some embodiments, buffering the input activations includes buffering M number of input activations arranged in pairs to the P-to-one multiplexer of the distribution network. In some embodiments, buffering the input activations includes buffering N number of identical sets of input activations arranged in pairs to the distribution network.

In some embodiments, buffering the input activations in 1402 includes buffering the input activations in pairs to the distribution network over a plurality of clock cycles to perform row pipelining. During a clock cycle, input activations are buffered to a subset of the distribution network corresponding to a group of row(s) of the P number of sub-macros.

In some embodiments, buffering the input activations in 1402 includes buffering the input activations in pairs to the distribution network over a plurality of time periods to perform column pipelining. During a time period, input activations are buffered to a column of the P number of sub-macros.

In 1404, a pair of input activations at an input of a P-to-one multiplexer of the distribution network is selected. P is a number of sub-macros in the DCiM macro.

In 1406, the P-to-one multiplexer outputs the the selected pair of input activations to a sub-macro.

In 1408, a two-to-one multiplexer of a compute-in-memory cell of the sub-macro selects an input activation from the selected pair of input activations.

In some embodiments, method 1400 further includes performing multiplication of the selected input activation with a weight stored in the compute-in-memory cell, and adding P partial sums output by the P number of sub-macros by a merging network.

In some embodiments, method 1400 further includes generating selection signals for the P-to-one multiplexer based on metadata encoding. In some embodiments, method 1400 includes generating selection signals for the two-to-one multiplexer based on metadata encoding coordinates of dense weights.

*Exemplary computing device*

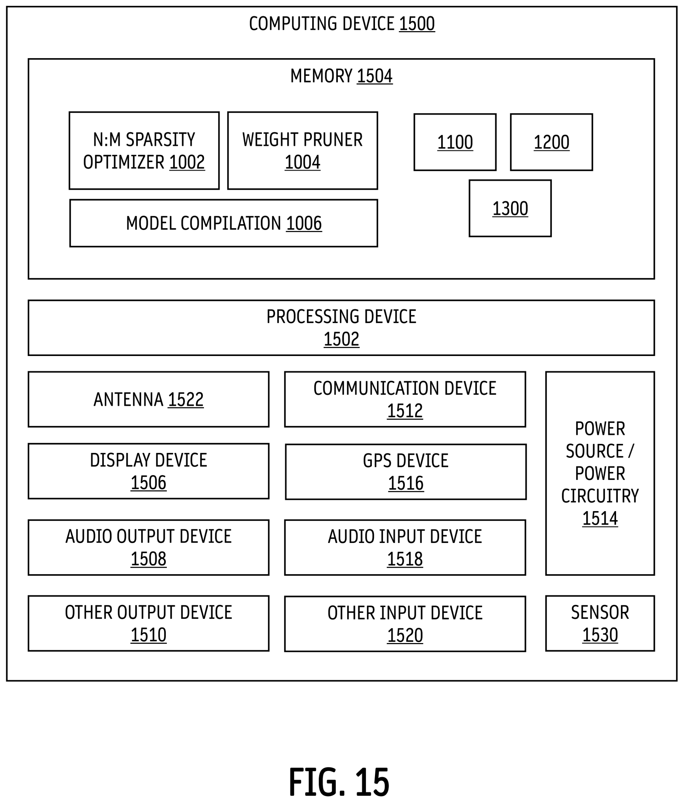

FIG. 15 is a block diagram of an apparatus or a system, e.g., an exemplary computing device 1500, according to some embodiments of the disclosure. One or more computing devices 1500 may be used to implement the functionalities described with the FIGS. and herein. A number of components illustrated in FIG. 15 can be included in the computing device 1500, but any one or more of these components may be omitted or duplicated, as suitable for the application. In some embodiments, some or all of the components included in the computing device 1500 may be attached to one or more motherboards. In some embodiments, some or all of these components are fabricated onto a single system on a chip (SoC) die. Additionally, in various embodiments, the computing device 1500 may not include one or more of the components illustrated in FIG. 15, and the computing device 1500 may include interface circuitry for coupling to the one or more components. For example, the computing device 1500 may not include a display device 1506, and may include display device interface circuitry (e.g., a connector and driver circuitry) to which a display device 1506 may be coupled. In another set of examples, the computing device 1500 may not include an audio input device 1518 or an audio output device 1508 and may include audio input or output device interface circuitry (e.g., connectors and supporting circuitry) to which an audio input device 1518 or audio output device 1508 may be coupled.

Computing device 1500 may include processing device 1502 (e.g., one or more processing devices, one or more of the same types of processing device, one or more of different types of processing device). Processing device 1502 may include electronic circuitry that processes electronic data from data storage elements (e.g., registers, memory, resistors, capacitors, quantum bit-cells) to transform that electronic data into other electronic data that may be stored in registers and/or memory. Examples of processing device 1502 may include a CPU, a GPU, a quantum processor, a machine learning processor, an artificial intelligence processor, a neural network processor, an artificial intelligence accelerator, an application-specific integrated circuit (ASIC), an analog signal processor, an analog computer, a microprocessor, a digital signal processor, a field programmable gate array (FPGA), a tensor processing unit (TPU), a neural network hardware accelerator, a DNN hardware accelerator (e.g., having an DCiM macro as described herein), etc.

In some embodiments, processing device 1502 can include a digital accelerator as described and illustrated herein, including a digital accelerator that implements the FlexCiM architecture.

Computing device 1500 may include memory 1504, which may itself include one or more memory devices such as volatile memory (e.g., DRAM), non-volatile memory (e.g., read-only memory (ROM)), high bandwidth memory (HBM), flash memory, solid state memory, and/or a hard drive. Memory 1504 includes one or more non-transitory computer-readable storage media. In some embodiments, memory 1504 may include memory that shares a die with the processing device 1502.

In some embodiments, memory 1504 includes one or more non-transitory computer-readable media storing instructions executable to perform operations described with the FIGS. and herein. Exemplary parts, e.g., N:M sparsity optimizer 1002, weight pruner 1004, and model compilation 1006, that may be encoded as instructions and stored in memory 1504 are depicted. Memory 1504 may store instructions that encode one or more exemplary parts, such as one or more parts of N:M sparsity optimizer 1002. The instructions stored in the one or more non-transitory computer-readable media may be executed by processing device 1502. Memory 1504 may store instructions that cause processing device 1502 to perform one or more of: method 1100, method 1200, and method 1300.

In some embodiments, memory 1504 may store data, e.g., data structures, binary data, bits, metadata, files, blobs, etc., as described with the FIGS. and herein. Memory 1504 can store input data, intermediate data, and output data for various parts, e.g., N:M sparsity optimizer 1002, weight pruner 1004, and model compilation 1006.

In some embodiments, memory 1504 may store one or more DNNs (and or parts thereof). Memory 1504 may store training data for training (trained) a DNN. Memory 1504 may store instructions that perform operations associated with training a DNN. Memory 1504 may store input data, output data, intermediate outputs, intermediate inputs of one or more DNNs. Memory 1504 may store one or more parameters used by the one or more DNNs. Memory 1504 may store information that encodes how nodes of the one or more DNNs are connected with each other. Memory 1504 may store instructions to perform one or more operations of the one or more DNNs. Memory 1504 may store a model definition that specifies one or more operations of a DNN. Memory 1504 may store machine-readable instructions, such as configuration descriptors, that are generated by a compiler based on the model definition.

In some embodiments, computing device 1500 may include a communication device 1512 (e.g., one or more communication devices). For example, communication device 1512 may be configured for managing wired and/or wireless communications for the transfer of data to and from the computing device 1500. The term "wireless" and its derivatives may be used to describe circuits, devices, systems, methods, techniques, communications channels, etc., that may communicate data through the use of modulated electromagnetic radiation through a nonsolid medium. The term does not imply that the associated devices do not contain any wires, although in some embodiments they might not. The communication device 1512 may implement any of a number of wireless standards or protocols, including but not limited to Institute for Electrical and Electronic Engineers (IEEE) standards including Wi-Fi (IEEE 802.10 family), IEEE 802.16 standards (e.g., IEEE 802.16-2005 Amendment), Long-Term Evolution (LTE) project along with any amendments, updates, and/or revisions (e.g., advanced LTE project, ultramobile broadband (UMB) project (also referred to as "3GPP2"), etc.). IEEE 802.16 compatible Broadband Wireless Access (BWA) networks are generally referred to as WiMAX networks, an acronym that stands for worldwide interoperability for microwave access, which is a certification mark for products that pass conformity and interoperability tests for the IEEE 802.16 standards. The communication device 1512 may operate in accordance with a Global System for Mobile Communication (GSM), General Packet Radio Service (GPRS), Universal Mobile Telecommunications System (UMTS), High Speed Packet Access (HSPA), Evolved HSPA (E-HSPA), or LTE network. The communication device 1512 may operate in accordance with Enhanced Data for GSM Evolution (EDGE), GSM EDGE Radio Access Network (GERAN), Universal Terrestrial Radio Access Network (UTRAN), or Evolved UTRAN (E-UTRAN). The communication device 1512 may operate in accordance with Code-division Multiple Access (CDMA), Time Division Multiple Access (TDMA), Digital Enhanced Cordless Telecommunications (DECT), Evolution-Data Optimized (EV-DO), and derivatives thereof, as well as any other wireless protocols that are designated as 3G, 4G, 5G, and beyond. The communication device 1512 may operate in accordance with other wireless protocols in other embodiments. Computing device 1500 may include an antenna 1522 to facilitate wireless communications and/or to receive other wireless communications (such as radio frequency transmissions). Computing device 1500 may include receiver circuits and/or transmitter circuits. In some embodiments, communication device 1512 may manage wired communications, such as electrical, optical, or any other suitable communication protocols (e.g., the Ethernet). As noted above, communication device 1512 may include multiple communication chips. For instance, a first communication device 1512 may be dedicated to shorter-range wireless communications such as Wi-Fi or Bluetooth, and a second communication device 1512 may be dedicated to longer-range wireless communications such as global positioning system (GPS), EDGE, GPRS, CDMA, WiMAX, LTE, EV-DO, or others. In some embodiments, a first communication device 1512 may be dedicated to wireless communications, and a second communication device 1512 may be dedicated to wired communications.

Computing device 1500 may include power source / power circuitry 1514. The power source / power circuitry 1514 may include one or more energy storage devices (e.g., batteries or capacitors) and/or circuitry for coupling components of the computing device 1500 to an energy source separate from the computing device 1500 (e.g., DC power, AC power, etc.).

Computing device 1500 may include a display device 1506 (or corresponding interface circuitry, as discussed above). The display device 1506 may include any visual indicators, such as a heads-up display, a computer monitor, a projector, a touchscreen display, a liquid crystal display (LCD), a light-emitting diode display, or a flat panel display, for example.

Computing device 1500 may include an audio output device 1508 (or corresponding interface circuitry, as discussed above). The audio output device 1508 may include any device that generates an audible indicator, such as speakers, headsets, or earbuds, for example.

Computing device 1500 may include an audio input device 1518 (or corresponding interface circuitry, as discussed above). The audio input device 1518 may include any device that generates a signal representative of a sound, such as microphones, microphone arrays, or digital instruments (e.g., instruments having a musical instrument digital interface (MIDI) output).

Computing device 1500 may include a GPS device 1516 (or corresponding interface circuitry, as discussed above). The GPS device 1516 may be in communication with a satellite-based system and may receive a location of the computing device 1500, as known in the art.

Computing device 1500 may include a sensor 1530 (or one or more sensors). Computing device 1500 may include corresponding interface circuitry, as discussed above). Sensor 1530 may sense physical phenomenon and translate the physical phenomenon into electrical signals that can be processed by, e.g., processing device 1502. Examples of sensor 1530 may include: capacitive sensor, inductive sensor, resistive sensor, electromagnetic field sensor, light sensor, camera, imager, microphone, pressure sensor, temperature sensor, vibrational sensor, accelerometer, gyroscope, strain sensor, moisture sensor, humidity sensor, distance sensor, range sensor, time-of-flight sensor, pH sensor, particle sensor, air quality sensor, chemical sensor, gas sensor, biosensor, ultrasound sensor, a scanner, etc.

Computing device 1500 may include another output device 1510 (or corresponding interface circuitry, as discussed above). Examples of the other output device 1510 may include an audio codec, a video codec, a printer, a wired or wireless transmitter for providing information to other devices, haptic output device, gas output device, vibrational output device, lighting output device, home automation controller, or an additional storage device.

Computing device 1500 may include another input device 1520 (or corresponding interface circuitry, as discussed above). Examples of the other input device 1520 may include an accelerometer, a gyroscope, a compass, an image capture device, a keyboard, a cursor control device such as a mouse, a stylus, a touchpad, a bar code reader, a Quick Response (QR) code reader, any sensor, or a radio frequency identification (RFID) reader.

Computing device 1500 may have any desired form factor, such as a handheld or mobile computer system (e.g., a cell phone, a smart phone, a mobile internet device, a music player, a tablet computer, a laptop computer, a netbook computer, a personal digital assistant (PDA), a personal computer, a remote control, wearable device, headgear, eyewear, footwear, electronic clothing, etc.), a desktop computer system, a server or other networked computing component, a printer, a scanner, a monitor, a set-top box, an entertainment control unit, a vehicle control unit, a digital camera, a digital video recorder, an Internet-of-Things device, or a wearable computer system. In some embodiments, the computing device 1500 may be any other electronic device that processes data.

*Select examples*

Example 1 provides an integrated circuit to accelerate multiply-and-accumulate operations of activations and weights with an N:M sparsity pattern, including a digital compute-in-memory macro having X rows and Y columns of compute-in-memory cells, the digital compute-in-memory macro arranged as a P number of sub-macros, where a sub-macro of the P number of sub-macros has X divided by P rows and Y columns of compute-in-memory cells, and a compute-in-memory cell has a two-to-one multiplexer to select one of two activations to be multiplied with a weight stored in the compute-in-memory cell; an activation buffer to buffer the activations according to N and M; a distribution network to receive the activations from the activation buffer, the distribution network including a P number of P-to-one multiplexers with P outputs to the P number of sub-macros respectively; and a merging network to sum P partial sums computed by the P number of sub-macros.

Example 2 provides the integrated circuit of example 1, where a P-to-one multiplexer of the P number of P-to-one multiplexers has: P inputs, where each input receives two activation words from the activation buffer; and an output to output two selected activation words.

Example 3 provides the integrated circuit of example 1 or 2, where a P-to-one multiplexer of the P number of P-to-one multiplexers receives M number of activations arranged in pairs from the activation buffer.

Example 4 provides the integrated circuit of any one of examples 1-3, where the P number of P-to-one multiplexers receive N number of identical sets of activations arranged in pairs.

Example 5 provides the integrated circuit of any one of examples 1-4, further including a controller to output selection signals for the P number of P-to-one multiplexers.

Example 6 provides the integrated circuit of example 5, where the selection signals for the P number of P-to-one multiplexers are generated by the controller based on metadata encoding coordinates of dense weights.

Example 7 provides the integrated circuit of any one of examples 1-6, where the sub-macro of the P number of sub-macros further includes a column controller to output selection signals for two-to-one multiplexers of a given column of compute-in-memory cells.

Example 8 provides the integrated circuit of example 7, where the selection signals for the two-to-one multiplexers of the given column of compute-in-memory cells are generated by the column controller based on metadata encoding coordinates of dense weights.

Example 9 provides the integrated circuit of any one of examples 1-8, where rows at a same row position in the P number of sub-macros share the P number of P-to-one multiplexers.

Example 10 provides the integrated circuit of any one of examples 1-9, where the compute-in-memory cell includes a bit-serial multiplier circuit to multiply a selected one of the two activations and the weight.

Example 11 provides the integrated circuit of any one of examples 1-10, where the compute-in-memory cell stores an 8-bit memory word.

Example 12 provides the integrated circuit of any one of examples 1-11, where the activations are represented by 8-bit words.

Example 13 provides the integrated circuit of any one of examples 1-12, where the compute-in-memory cell as a memory mode and a compute mode.

Example 14 provides a method for accelerating multiply-and-accumulate operations of activations and weights with an N:M sparsity pattern using a digital compute-in-memory macro having P number of sub-macros, the method including buffering, to a distribution network, the activations in pairs according to N and M; selecting a pair of activations at an input of a P-to-one multiplexer of the distribution network; outputting, by the P-to-one multiplexer, the selected pair of activations to a sub-macro; and selecting, by a two-to-one multiplexer of a compute-in-memory cell of the sub-macro, an activation from the selected pair of activations.

Example 15 provides the method of example 14, further including performing multiplication of the selected activation from the selected pair of activations with a weight stored in the compute-in-memory cell; and adding P partial sums output by the P number of sub-macros.

Example 16 provides the method of example 14 or 15, where buffering the activations in pairs includes buffering M number of activations arranged in pairs to the P-to-one multiplexer of the distribution network.

Example 17 provides the method of any one of examples 14-16, where buffering the activations in pairs includes buffering N number of identical sets of activations arranged in pairs to the distribution network.

Example 18 provides the method of any one of examples 14-17, where buffering the activations in pairs includes buffering the activations in pairs to the distribution network over a plurality of clock cycles, where during a clock cycle, the activations are buffered to a subset of the distribution network corresponding to a group of row(s) of the P number of sub-macros.

Example 19 provides the method of any one of examples 14-18, where buffering the activations in pairs includes buffering the activations in pairs to the distribution network over a plurality of time periods, where during a time period, activations are buffered to a column of the P number of sub-macros.

Example 20 provides the method of any one of examples 14-19, further including generating selection signals for the P-to-one multiplexer based on metadata encoding coordinates of dense weights.

Example 21 provides the method of any one of examples 14-20, further including generating a selection signal for the two-to-one multiplexer based on metadata encoding coordinates of dense weights.

Example 22 provides a method, including Identifying a plurality of outliers for a layer of a neural network, the plurality of outliers corresponding to a plurality of weights of the layer of the neural network; determining a count of the outliers; determining a locality measure of the outliers; determining a value A of a sparsity ratio of A/B based on the count; determining a value B of the sparsity ratio of A/B based on the locality measure; and assigning a sparsity pattern of N:M for the layer based on the sparsity ratio of A/B.

Example 23 provides the method of example 22, where the locality measure indicates how close or far apart the plurality of outliers are.

Example 24 provides the method of example 22 or 23, where determining the locality measure includes calculating the locality measure based on one or more pairwise distances of the plurality of outliers within a neighborhood.

Example 25 provides the method of any one of examples 22-24, where determining the locality measure includes calculating the locality measure based on an average of one or more pairwise distances of the plurality of outliers within a neighborhood.

Example 26 provides the method of any one of examples 22-25, where assigning the sparsity pattern includes determining the sparsity pattern of N:M having a lowest value for M that preserves the sparsity ratio of A/B.

Example 27 provides the method of any one of examples 22-26, where assigning the sparsity pattern includes determining the sparsity pattern of N:M having a highest value for M that preserves the sparsity ratio of A/B.

Example 28 provides the method of any one of examples 22-27, where assigning the sparsity pattern includes removing a candidate sparsity pattern having a highest latency; and determining the sparsity pattern of N:M from one or more remaining candidate sparsity patterns having a highest value for M that preserves the sparsity ratio of A/B.

Example 29 provides the method of any one of examples 22-28, where assigning the sparsity pattern includes assigning the sparsity pattern based on a latency importance category.

Example 30 provides the method of any one of examples 22-29, where determining the value A of the sparsity ratio A/B includes setting the value A higher when the count is higher.

Example 31 provides the method of any one of examples 22-30, where determining the value B of the sparsity ratio A/B includes setting the value B higher when the locality measure indicates that the plurality of outliers are more clustered than far apart.

Example 32 provides the method of any one of examples 22-31, further including pruning the plurality of weights of the layer according to the sparsity pattern of N:M.

Example 33 provides the method of any one of examples 22-32, further including generating machine-readable instructions or configurations for the neural network using the sparsity pattern of N:M for the layer.

Example 34 provides one or more non-transitory computer-readable media storing instructions, that when executed by one or more processors, cause the one or more processors to perform a method according to any one of examples 22-33.

Example 35 provides an apparatus including means for performing a method according to any one of examples 14-33.

Example 36 provides an apparatus to accelerate multiply-and-accumulate operations of activations and weights with an N:M sparsity pattern, including a digital compute-in-memory macro having an array of compute-in-memory cells arranged as a P number of sub-macros subdividing the array along a dimension, where a compute-in-memory cell has a two-to-one multiplexer to select one of two activations to be multiplied with a weight stored in the compute-in-memory cell; a memory interface to retrieve the activations from a memory; an activation buffer to buffer the activations from the memory interface according to N and M; a distribution network to receive the activations from the activation buffer, the distribution network including a P number of P-to-one multiplexers with P outputs to the P number of sub-macros respectively; and a merging network to sum P partial sums computed by the P number of sub-macros.

Example 37 provides the apparatus of example 36, where a P-to-one multiplexer of the P number of P-to-one multiplexers has: P inputs, where each input receives two activation words from the activation buffer; and an output to output two selected activation words.

Example 38 provides the apparatus of example 36 or 37, where a P-to-one multiplexer of the P number of P-to-one multiplexers receives M number of activations arranged in pairs from the activation buffer.

Example 39 provides the apparatus of any one of examples 36-38, where the P number of P-to-one multiplexers receive N number of identical sets of activations arranged in pairs.

Example 40 provides a digital compute-in-memory apparatus for accelerating structured sparse deep neural networks, comprising: a plurality of digital compute-in-memory sub-macros, each sub-macro comprising memory cells configured to store weight data and to execute 1:2 structured sparsity operations; an activation buffer configured to store activation data for processing by the plurality of sub-macros; a distribution network comprising a plurality of multiplexers, each multiplexer configured to selectively route activation data from the activation buffer to corresponding sub-macros based on sparsity metadata to enable support for multiple N:M structured sparsity patterns; and a merging network configured to combine partial sum outputs from the plurality of sub-macros to generate final computation results.

Example 41 provides the digital compute-in-memory apparatus of example 40, further including aspects one or more aspects of examples 1-13.

### *Variations and other notes*

As used herein, the term "coupled to" or "coupled with" refers to a relationship between electronic components or circuit elements wherein the components are in electronic communication with one another and capable of transmitting and/or receiving electrical signals between them. The term "coupled to" does not require a direct physical or electrical connection between the coupled components. Rather, "coupled to" can encompass arrangements where the components are connected through one or more intervening elements, components, circuits, or transmission paths. For example, a first component may be "coupled to" a second component through intermediate components such as resistors, capacitors, inductors, transistors, logic gates, buses, transformers, or other electronic components, or through intermediate transmission paths, while still maintaining the capability for electronic communication between the first and second components.

The above description of illustrated implementations of the disclosure, including what is described in the Abstract, is not intended to be exhaustive or to limit the disclosure to the precise forms disclosed. While specific implementations of, and examples for, the disclosure are described herein for illustrative purposes, various equivalent modifications are possible within the scope of the disclosure, as those skilled in the relevant art will recognize. These modifications may be made to the disclosure in light of the above detailed description.

For purposes of explanation, specific numbers, materials and configurations are set forth in order to provide a thorough understanding of the illustrative implementations. However, it will be apparent to one skilled in the art that the present disclosure may be practiced without the specific details and/or that the present disclosure may be practiced with only some of the described aspects. In other instances, well known features are omitted or simplified in order not to obscure the illustrative implementations.

Further, references are made to the accompanying drawings that form a part hereof, and in which are shown, by way of illustration, embodiments that may be practiced. It is to be understood that other embodiments may be utilized, and structural or logical changes may be made without departing from the scope of the present disclosure. Therefore, the following detailed description is not to be taken in a limiting sense.

Various operations may be described as multiple discrete actions or operations in turn, in a manner that is most helpful in understanding the disclosed subject matter. However, the order of description should not be construed as to imply that these operations are necessarily order dependent. In particular, these operations may not be performed in the order of presentation. Operations described may be performed in a different order from the described embodiment. Various additional operations may be performed or described operations may be omitted in additional embodiments.

For the purposes of the present disclosure, the phrase "A or B" or the phrase "A and/or B" means (A), (B), or (A and B). For the purposes of the present disclosure, the phrase "A, B, or C" or the phrase "A, B, and/or C" means (A), (B), (C), (A and B), (A and C), (B and C), or (A, B, and C). The term "between," when used with reference to measurement ranges, is inclusive of the ends of the measurement ranges.

The description uses the phrases "in an embodiment" or "in embodiments," which may each refer to one or more of the same or different embodiments. The terms "comprising," "including," "having," and the like, as used with respect to embodiments of the present disclosure, are synonymous. The disclosure may use perspective-based descriptions such as "above," "below," "top," "bottom," and "side" to explain various features of the drawings, but these terms are simply for ease of discussion, and do not imply a desired or required orientation. The accompanying drawings are not necessarily drawn to scale. Unless otherwise specified, the use of the ordinal adjectives "first," "second," and "third," etc., to describe a common object, merely indicates that different instances of like objects are being referred to and are not intended to imply that the objects so described must be in a given sequence, either temporally, spatially, in ranking or in any other manner.

In the following detailed description, various aspects of the illustrative implementations will be described using terms commonly employed by those skilled in the art to convey the substance of their work to others skilled in the art.

The terms "substantially," "close," "approximately," "near," and "about," generally refer to being within +/- 20% of a target value as described herein or as known in the art. Similarly, terms indicating orientation of various elements, e.g., "coplanar," "perpendicular," "orthogonal," "parallel," or any other angle between the elements, generally refer to being within +/- 5-20% of a target value as described herein or as known in the art.

In addition, the terms "comprise," "comprising," "include," "including," "have," "having" or any other variation thereof, are intended to cover a non-exclusive inclusion. For example, a method, process, or device, that comprises a list of elements is not necessarily limited to only those elements but may include other elements not expressly listed or inherent to such method, process, or device. Also, the term "or" refers to an inclusive "or" and not to an exclusive "or."

The systems, methods and devices of this disclosure each have several innovative aspects, no single one of which is solely responsible for all desirable attributes disclosed herein. Details of one or more implementations of the subject matter described in this specification are set forth in the description and the accompanying drawings.

**Claims**

1. An integrated circuit to accelerate multiply-and-accumulate operations of activations and weights with an N:M sparsity pattern, comprising:

a digital compute-in-memory macro having X rows and Y columns of compute-in-memory cells, the digital compute-in-memory macro arranged as a P number of sub-macros, wherein a sub-macro of the P number of sub-macros has X divided by P rows and Y columns of compute-in-memory cells, and a compute-in-memory cell has a two-to-one multiplexer to select one of two activations to be multiplied with a weight stored in the compute-in-memory cell;
an activation buffer to buffer the activations according to N and M;
a distribution network to receive the activations from the activation buffer, the distribution network comprising a P number of P-to-one multiplexers with P outputs to the P number of sub-macros respectively; and
a merging network to sum P partial sums computed by the P number of sub-macros.

2. The integrated circuit of claim 1, wherein a P-to-one multiplexer of the P number of P-to-one multiplexers has:

P inputs, wherein each input receives two activation words from the activation buffer; and
an output to output two selected activation words.

3. The integrated circuit of claim 1 or 2, wherein a P-to-one multiplexer of the P number of P-to-one multiplexers receives M number of activations arranged in pairs from the activation buffer.

4. The integrated circuit of any one of claims 1-3, wherein the P number of P-to-one multiplexers receive N number of identical sets of activations arranged in pairs.

5. The integrated circuit of any one of claims 1-4, further comprising:
a controller to output selection signals for the P number of P-to-one multiplexers.

6. A method for accelerating multiply-and-accumulate operations of activations and weights with an N:M sparsity pattern using a digital compute-in-memory macro having P number of sub-macros, the method comprising:

buffering, to a distribution network, the activations in pairs according to N and M;
selecting a pair of activations at an input of a P-to-one multiplexer of the distribution network;
outputting, by the P-to-one multiplexer, the selected pair of activations to a sub-macro; and
selecting, by a two-to-one multiplexer of a compute-in-memory cell of the sub-macro, an activation from the selected pair of activations.

**7.** The method of claim 6, further comprising:

> performing multiplication of the selected activation from the selected pair of activations with a weight stored in the compute-in-memory cell; and
> adding P partial sums output by the P number of sub-macros.

**8.** The method of claim 6 or 7, wherein buffering the activations in pairs comprises:
buffering M number of activations arranged in pairs to the P-to-one multiplexer of the distribution network.

**9.** The method of any one of claims 6-8, wherein buffering the activations in pairs comprises:
buffering N number of identical sets of activations arranged in pairs to the distribution network.

**10.** The method of any one of claims 6-9, wherein buffering the activations in pairs comprises:
buffering the activations in pairs to the distribution network over a plurality of clock cycles, wherein during a clock cycle, the activations are buffered to a subset of the distribution network corresponding to a group of row(s) of the P number of sub-macros.

**11.** The method of any one of claims 6-10, wherein buffering the activations in pairs comprises:
buffering the activations in pairs to the distribution network over a plurality of time periods, wherein during a time period, activations are buffered to a column of the P number of sub-macros.

**12.** The method of any one of claims 6-11, further comprising:
generating selection signals for the P-to-one multiplexer based on metadata encoding coordinates of dense weights.

**13.** The method of any one of claims 6-12, further comprising:
generating a selection signal for the two-to-one multiplexer based on metadata encoding coordinates of dense weights.

**14.** An apparatus to accelerate multiply-and-accumulate operations of activations and weights with an N:M sparsity pattern, comprising means for performing the method according to any one of claims 6-13.

**FIG. 1A**

**FIG. 1B**

FIG. 2

FIG. 3

FIG. 4

210

SELECT SIGNAL
FROM CONTROLLER

502

FROM iAct BUFFER

0

TO SUB-MACRO 0

SELECT SIGNAL
FROM CONTROLLER

502

FROM iAct BUFFER

1

TO SUB-MACRO 1

SELECT SIGNAL
FROM CONTROLLER

502

FROM iAct BUFFER

2

TO SUB-MACRO 2

SELECT SIGNAL
FROM CONTROLLER

502

FROM iAct BUFFER

P-1

TO SUB-MACRO P-1

*FOR ROW R OF ALL SUB-MACROS*

# FIG. 5

<u>216</u>

PSUM SUB-MACRO 0
PSUM SUB-MACRO 1
⋮
PSUM SUB-MACRO P-2
PSUM SUB-MACRO P-1

FINAL PSUM

# FIG. 6

## 1:4 Sparsity Pattern

iActs$_{1x32}$

| 1 | 2 | 3 | .... | 30 | 31 | 32 |

$W^T_{2x32}$

| 0 | 0 | 2 | 0 | ..... | 0 | 16 | 0 | 0 |
| 1 | 0 | 0 | 0 | | 0 | 0 | 15 | 0 |

## Weights encoded in CSC format

| 2 | 4 | 6 | 8 | 10 | 12 | 14 | 16 |
| 1 | 3 | 5 | 7 | 9 | 11 | 13 | 15 |

| 2 | 3 | 2 | 0 | 2 | 3 | 0 | 1 |
| 0 | 2 | 1 | 2 | 1 | 3 | 1 | 1 | Metadata

# FIG. 7A

**❶ Controller 206**

| 2 | 3 | 2 | 0 | 2 |
| 0 | 2 | 1 | 2 | 1 | ........

Row 0
Distribution Network

❸          ❺

# FIG. 7B

4:8 Sparsity Pattern

FIG. 8A

FIG. 8B

**Case 1**

**Outlier Presence:** Low
**Outlier Distribution:** Sparse
**Optimal N:M = 1:4**

LEGEND
Inlier Value ☒ Outlier Value

# FIG. 9A

**Case 2**

**Outlier Presence:** High
**Outlier Distribution:** Sparse
**Optimal N:M = 2:4**

LEGEND
Inlier Value ☒ Outlier Value

# FIG. 9B

**Case 3**

**Outlier Presence:** High
**Outlier Distribution:** Clustered/Adjacent
**Optimal N:M = 4:8**

LEGEND
Inlier Value ☒ Outlier Value

# FIG. 9C

1000

## N:M SPARSITY OPTIMIZER 1002

IDENTIFY OUTLIERS
1090

TARGET
LATENCY →

LAYER-WISE
OUTLIER COUNTER
1010

LAYER-WISE
OUTLIER LOCALITY
INDEX
CALCULATOR 1020

TARGET
SPARSITY →

LATENCY
CALCULATOR
1080

ESTIMATE A/B SPARSITY
RATIO 1030

NEURAL
NETWORK
MODEL →

FINALIZE OPTIMAL N:M
SPARSITY PATTERN 1040

NEURAL
NETWORK
MODEL →

WEIGHT PRUNER 1004

NEURAL
NETWORK
MODEL →

MODEL COMPILATION 1006

# FIG. 10

1100

DETERMINE IMPORTANCE SCORES 1102

↓

DETERMINE MEAN AND STANDARD DEVIATION 1104

↓

DETERMINE OUTLIER THRESHOLD USING PARAMETER AND STANDARD DEVIATION 1106

↓

IDENTIFY OUTLIERS USING OUTLIER THRESHOLD AND MEAN 1108

FOR A NEIGHBORHOOD

COUNT OUTLIERS 1110

CALCULATE PAIRWISE DISTANCE BETWEEN OUTLIERS TO FORM A MATRIX OF DISTANCES 1112

SUM UP UPPER TRIANGULAR PART OF THE MATRIX OF DISTANCES AND DIVIDE BY THE NUMBER OF OUTLIERS TO OBTAIN AN AVERAGE DISTANCE 1114

# FIG. 11

1200

DETERMINE CANDIDATE Ns AND CANDIDATE Ms 1202

FOR A LAYER

DETERMINE OUTLIER COUNT 1204

DETERMINE OUTLIER LOCALITY MEASURE 1208

ESTIMATE A 1206

ESTIMATE B 1210

1212

LATENCY IMPORTANCE=LOW

NO

1216

NO = LATENCY IMPORANCE=HIGH

YES

LATENCY IMPORTANCE=MED

ASSIGN A:B AS SPARSITY PATTERN 1214

YES

ASSIGN SPASITY PATTERN WITH LOWEST LATENCY 1222

REMOVE N:M SPARSITY WITH HIGHEST LATENCY 1218

ASSIGN SPASITY PATTERN WITH BEST ACCURACY 1220

# FIG. 12

1300

```
┌─────────────────────────────────────────────────────┐
│   IDENTIFY OUTLIERS FOR A LAYER OF A NEURAL NETWORK   │
│                        1302                           │
└─────────────────────────────────────────────────────┘
```

```
┌──────────────────────────────┐   ┌──────────────────────────────┐
│   DETERMINE A COUNT OF THE    │   │  DETERMINE A LOCALITY MEASURE │
│       OUTLIERS 1304           │   │     OF THE OUTLIERS 1308      │
└──────────────────────────────┘   └──────────────────────────────┘
```

```
┌──────────────────────────────┐   ┌──────────────────────────────┐
│  DETERMINE A VALUE A OF SPARSITY │ │  DETERMINE A VALUE B OF SPARSITY │
│  RATIO OF A/B BASED ON THE COUNT │ │  RATIO OF A/B BASED ON THE    │
│             1306              │   │     LOCALITY MEASURE 1310     │
└──────────────────────────────┘   └──────────────────────────────┘
```

```
┌─────────────────────────────────────────────────────┐
│  ASSIGN A SPARSITY PATTERN OF N:M FOR THE LAYER BASED │
│      ON THE VALUE A AND THE VALUE B 1312             │
└─────────────────────────────────────────────────────┘
```

# FIG. 13

1400

BUFFER THE INPUT ACTIVATION IN PAIRS ACCORDING TO N AND M TO A DISTRIBUTION NETWORK 1402

SELECT A PAIR OF INPUT ACTIVATIONS AT AN INPUT OF A P-TO-ONE MULTIPLEXER OF THE DISTRIBUTION NETWORK 1404

OUTPUT THE SELECTED PAIR OF INPUT ACTIVATIONS TO A SUB-MACRO 1406

SELECT AN INPUT ACTIVATION FROM THE SELECTED PAIR OF INPUT ACTIVATIONS BY A TWO-TO-ONE MULTIPLEXER OF A COMPUTE-IN-MEMORY CELL 1408

# FIG. 14

COMPUTING DEVICE 1500

MEMORY 1504

| N:M SPARSITY OPTIMIZER 1002 | WEIGHT PRUNER 1004 | 1100 | 1200 |
| --- | --- | --- | --- |

MODEL COMPILATION 1006

1300

PROCESSING DEVICE
1502

| ANTENNA 1522 | COMMUNICATION DEVICE 1512 | POWER SOURCE / POWER CIRCUITRY 1514 |
| --- | --- | --- |
| DISPLAY DEVICE 1506 | GPS DEVICE 1516 | |
| AUDIO OUTPUT DEVICE 1508 | AUDIO INPUT DEVICE 1518 | |
| OTHER OUTPUT DEVICE 1510 | OTHER INPUT DEVICE 1520 | SENSOR 1530 |

# FIG. 15

## EUROPEAN SEARCH REPORT

**Application Number**

EP 25 20 8279

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2019/392287 A1 (OVSIANNIKOV ILIA [US] ET AL) 26 December 2019 (2019-12-26) * paragraph [0258] - paragraph [0296]; figures 1A-1J * | 1-14 | INV. G06F7/544 |
| A | US 2024/119270 A1 (SHIN JONG HOON [US] ET AL) 11 April 2024 (2024-04-11) * paragraphs [0004] - [0005], [0031] - [0053]; figures 1A-7 * | 1-14 | |
| A | US 2021/004668 A1 (MOSHOVOS ANDREAS [CA] ET AL) 7 January 2021 (2021-01-07) * paragraph [0034] - paragraph [0071]; figures 4A-9 * | 1-14 | |
| X,P | AKSHAT RAMACHANDRAN ET AL: "Accelerating LLM Inference with Flexible N:M Sparsity via A Fully Digital Compute-in-Memory Accelerator", ARXIV.ORG, CORNELL UNIVERSITY LIBRARY, 201 OLIN LIBRARY CORNELL UNIVERSITY ITHACA, NY 14853, 19 April 2025 (2025-04-19), XP091999572, * the whole document * | 1-14 | **TECHNICAL FIELDS SEARCHED (IPC)** G06F |

The present search report has been drawn up for all claims

| Place of search | Date of completion of the search | Examiner |
|---|---|---|
| Munich | 20 February 2026 | Prins, Leendert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 20 8279

This annex lists the patent family members relating to the patent documents cited in the above-mentioned European search report.
The members are as contained in the European Patent Office EDP file on
The European Patent Office is in no way liable for these particulars which are merely given for the purpose of information.

20-02-2026

| Patent document cited in search report | Publication date | Patent family member(s) | Publication date |
|---|---|---|---|
| US 2019392287 A1 | 26-12-2019 | CN 112513885 A | 16-03-2021 |
| | | JP 7337103 B2 | 01-09-2023 |
| | | JP 2021528764 A | 21-10-2021 |
| | | KR 20210013764 A | 05-02-2021 |
| | | TW 202014935 A | 16-04-2020 |
| | | US 2019392287 A1 | 26-12-2019 |
| | | US 2020026978 A1 | 23-01-2020 |
| | | US 2020026979 A1 | 23-01-2020 |
| | | US 2020026980 A1 | 23-01-2020 |
| | | US 2020234099 A1 | 23-07-2020 |
| | | US 2023351151 A1 | 02-11-2023 |
| | | US 2024256828 A1 | 01-08-2024 |
| | | US 2025232152 A1 | 17-07-2025 |
| | | WO 2019245348 A1 | 26-12-2019 |
| US 2024119270 A1 | 11-04-2024 | EP 4343631 A1 | 27-03-2024 |
| | | KR 20240040608 A | 28-03-2024 |
| | | US 2024119270 A1 | 11-04-2024 |
| US 2021004668 A1 | 07-01-2021 | CA 3090329 A1 | 22-08-2019 |
| | | CN 111742331 A | 02-10-2020 |
| | | JP 7349438 B2 | 22-09-2023 |
| | | JP 2021515300 A | 17-06-2021 |
| | | KR 20200118815 A | 16-10-2020 |
| | | MY 208633 A | 21-05-2025 |
| | | SG 11202007532T A | 29-09-2020 |
| | | US 2021004668 A1 | 07-01-2021 |
| | | WO 2019157599 A1 | 22-08-2019 |

EPO FORM P0459

For more details about this annex : see Official Journal of the European Patent Office, No. 12/82

**EP 4 745 753 A1**

**Patent documents cited in the description**

- US 63720263